# EUROPEAN PATENT SPECIFICATION

(11) **EP 3 906 647 B1**
(45) Date of publication and mention of the grant of the patent: **31.05.2023**
(21) Application number: 19704864.8
(22) Date of filing: 04.01.2019
(51) Int. Cl.: H04W 8/20, H04W 36/00, H04L 9/40

(54) **FLEXIBLE AUTHORIZATION IN 5G SERVICE BASED CORE NETWORK**
FLEXIBLE AUTORISIERUNG IN EINEM AUF 5G-DIENST BASIERENDEN KERNNETZWERK
AUTORISATION FLEXIBLE DANS UN RÉSEAU CENTRAL BASÉ SUR UN SERVICE 5G

(43) Date of publication of application: 10.11.2021
(73) Proprietor: Telefonaktiebolaget LM Ericsson (publ), 164 83 Stockholm (SE)
(72) Inventor: FU, Zhang, 120 78 Stockholm (SE); ARKKO, Jari, FI02700 Kauniainen (FI); FERLIN, Simone, 16872 Stockholm (SE); SALMELA, Patrik, 02230 Espoo (FI)
(74) Representative: Zacco Sweden AB
(86) International application number: PCT/IB2019/050078
(87) International publication number: WO 2020/141356

(56) References cited:
- CN-A- 108 632 216
- US-A1- 2018 270 778

## Description

### Technical Field

The present disclosure relates to Network Function (NF) services provided by a telecommunications Core Network (CN), and particularly to NF service access authorization.

### Background

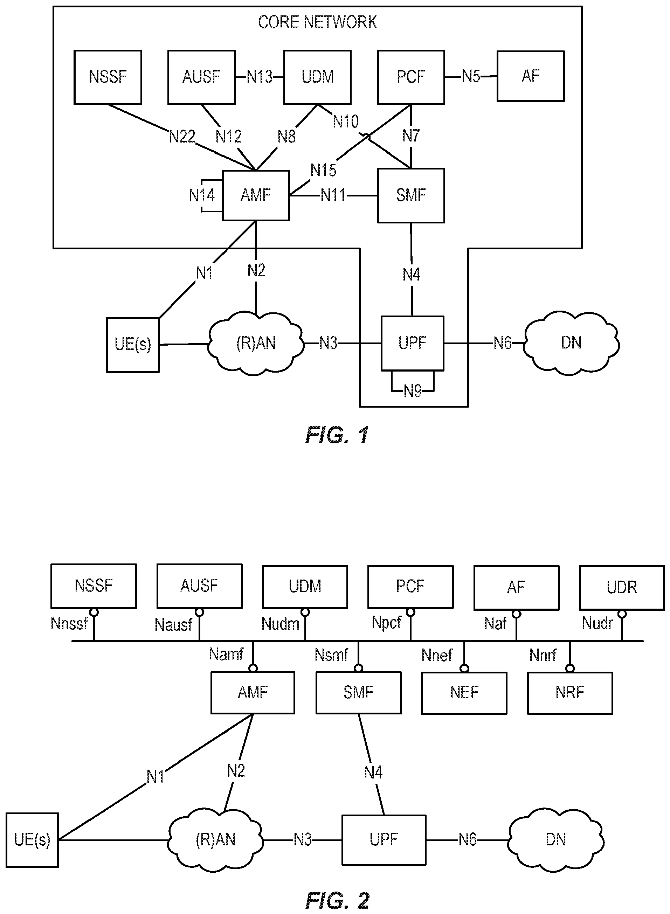

The Core Network (CN) defined by the Third Generation Partnership Project (3GPP) is the part of the mobile broadband network that connects the Next Generation (NG) Radio Access Network (RAN) and User Equipment (UE) to other external Data Networks (DN), e.g., the internet. The CN is, among others, responsible for forwarding packets between the UEs and the destination DNs, applying several tasks such as charging and policy control, Quality of Service (QoS) management, etc. The 3GPP Technical Specification (TS) 23.501, Version 15.4.0 defines some components and interfaces of a Fifth Generation (5G) CN (5GC), some of which are illustrated in Figure 1.

### 5GC Architecture

Figure 1 illustrates a wireless communication system represented as a 5GC architecture, composed of core Network Functions (NFs), where interaction between any two NFs is represented by a point-to-point reference point/interface.

Seen from the access side, the 5G network architecture shown in Figure 1 comprises a plurality of UEs connected to either a RAN or an Access Network (AN), referred to herein as a "(R)AN," as well as an Access and Mobility Management Function (AMF). Typically, the (R)AN comprises base stations, e.g., enhanced or evolved Node Bs (eNBs), New Radio Base Stations (gNBs), or similar. Seen from the core network side, the 5G core NFs shown in Figure 1 include a Network Slice Selection Function (NSSF), an Authentication Server Function (AUSF), a Unified Data Management (UDM), a Policy Control Function (PCF), an Application Function (AF), an AMF, a Session Management Function (SMF), and a User Plane Function (UPF).

Reference point representations of the 5G network architecture are used to develop detailed call flows in the normative standardization. The N1 reference point is defined to carry signaling between the UE and AMF. The reference points for connecting between the (R)AN and AMF and between the (R)AN and UPF are defined as N2 and N3, respectively. N4 is used by the SMF and UPF so that the UPF can be set using the control signal generated by the SMF, and the UPF can report its state to the SMF. N5 is the reference point by which the PCF applies policy to the AF. N6 is the reference point for the connection between the UPF and the DN. N7 is the reference point between the SMF and the PCF and by which the PCF applies policy to the SMF. N8 is the reference point by which the AMF gets subscription data for the UE from the UDM. N9 is the reference point for the connection between different UPFs. N10 is the reference point by which the SMF gets subscription data for the UE from the UDM. There is a reference point, N11, between the AMF and SMF, which implies that the SMF is at least partly controlled by the AMF. N12 is required for the AMF to perform authentication of the UE via the AUSF. N13 is the reference point by which the AUSF communicates with the UDM. N14 is the reference point connecting between different AMFs, respectively. N15 is the reference point through which the PCF applies policy to the AMF. N22 is the reference point by which the AMF communicates with the NSSF.

The 5G core network aims at separating the user plane and control plane. The user plane carries user traffic while the control plane carries signaling in the network. In Figure 1, the UPF is in the user plane and all other NFs, i.e., the AMF, SMF, PCF, AF, AUSF, NSSF, and UDM, are in the control plane. At least one UPF is traversed by the packets between the (R)AN - in this example, an NG-RAN - and a destination DN. Separating the user and control planes guarantees each plane resource to be scaled independently. It also allows UPFs to be deployed separately from control plane functions in a distributed fashion. In this architecture, UPFs may be deployed very close to UEs to shorten the Round Trip Time (RTT) between UEs and a data network for some applications requiring low latency.

The core 5G network architecture is composed of modularized functions. For example, the AMF and SMF are independent functions in the control plane. Separated AMF and SMFs allow independent evolution and scaling. Other control plane functions like the PCF and AUSF can be separated as shown in Figure 1. Modularized function design enables the 5G core network to support various services flexibly.

Each NF interacts with another NF directly. It is possible to use intermediate functions to route messages from one NF to another NF. In the control plane, a set of interactions between two NFs is defined as service so that its reuse is possible. This service enables support for modularity. The user plane supports interactions such as forwarding operations between different UPFs. For both the user plane and the control plane, the view of the core network as comprising a set of NFs that provide services to each other is referred to as a Service Based Architecture (SBA), and each service is requested and provided via a Service Based interface (SBI).

Figure 2 illustrates a 5G network architecture using service-based interfaces between the NFs in the control plane, instead of the point-to-point reference points/interfaces used in the 5G network architecture of Figure 1. However, the NFs described above with reference to Figure 1 correspond to the NFs shown in Figure 2. Figure 2 also includes a User Data Repository (UDR). The service(s) etc. that a NF provides to other authorized NFs can be exposed to the authorized NFs through the service-based interface. In Figure 2 the service based interfaces are indicated by the letter "N" followed by the name of the NF, e.g., Namf for the service based interface of the AMF and Nsmf for the service based interface of the SMF, etc. The Network Exposure Function (NEF) and the Network Repository Function (NRF) in Figure 2 are not shown in Figure 1 discussed above. However, it should be clarified that all NFs depicted in Figure 1 can interact with the NEF and the NRF of Figure 2 as necessary, though not explicitly indicated in Figure 1.

Some properties of the NFs shown in Figures 1 and 2 may be described in the following manner. The AMF provides UE-based authentication, authorization, mobility management, etc. A UE even using multiple access technologies is basically connected to a single AMF because the AMF is independent of the access technologies. The SMF is responsible for session management and allocates Internet Protocol (IP) addresses to UEs. It also selects and controls the UPF for data transfer. If a UE has multiple sessions, different SMFs may be allocated to each session to manage them individually and possibly provide different functionalities per session. The AF provides information on the packet flow to the PCF responsible for policy control in order to support QoS. Based on the information, the PCF determines policies about mobility and session management to make the AMF and SMF operate properly. The AUSF supports authentication function for UEs or similar and thus stores data for authentication of UEs or similar while the UDM stores subscription data of the UE. The DN, not part of the 5G core network, provides internet access or operator services and similar.

### Conventional NF Service Access Authorization

3GPP TS 23.502, Version 15.4.0 defines procedures for the 5G system. To achieve a specific 3GPP system procedure, a series of services need to be called. For example, in the UE registration procedure, the UE sends a registration request to an AMF; the AMF calls the authentication service at AUSF; and the AUSF calls the service of a UDM to retrieve the authentication related data of the UE. Another example is the Protocol Data Unit (PDU) session establishment procedure, where the UE sends the PDU session establishment request to an AMF; the AMF calls the PDU session service in an SMF; and the SMF calls a UDM's service to retrieve the corresponding subscription data; after which the SMF calls the service in a PCF to retrieve the corresponding policy for the PDU session.

3GPP TS 33.501, Version 15.3.1 defines an authorization framework, which uses the OAuth 2.0 framework described in the Internet Engineering Task Force (IETF) Request for Comment (RFC) 6749. The basic roles in OAuth 2.0 are *resource owner, client, authorization server,* and *resource server.* In SBA, the NRF shall be the authorization server, the NF service consumer shall be the OAuth 2.0 client, and the NF service producer shall be the OAuth 2.0 resource server. In 3GPP, the OAuth 2.0 resource owner is not involved in the Hypertext Transfer Protocol (HTTP) exchanges directly but rather has configured the NRF to act on its behalf to make authorization decisions.

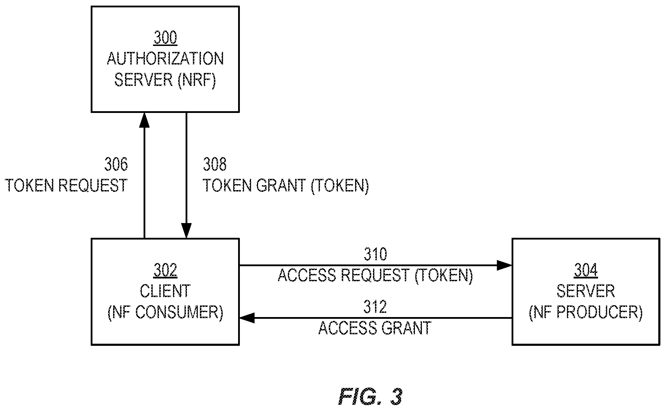

Figure 3 illustrates an overview of the conventional procedure of making a service request with an access token. This procedure involves an authorization server 300, such as an NRF, a client 302, which may also be referred to herein as an NF consumer, and a resource server 304, which may also be referred to herein as an NF producer.

When an NF consumer 302 wants to use a service that is provided by a NF producer 304, the NF consumer 302 sends a token request (step 306) to the NRF 300 with a list of information, such as NF consumer type and Identity (ID), NF producer type and ID(s), and service name, at least some of which had been determined in a previously performed service discovery operation. In Figure 3, the NRF 300 receives the access token request. If the NF consumer 302 is allowed to access the service provided by the NF producer 304, the NRF 300 will authorize the NF consumer 302, generate an access token, and send the access token back to the NF consumer 302 (step 308). The NF consumer 302 then sends a service request to the NF producer 304 (step 310), the service request including the token that the NF consumer 302 received from the NRF 300. The NF producer 304 verifies the token and grants access to the service (step 312).

It should be noted that in conventional systems, before an NF consumer can perform the authorization process illustrated in Figure 3, the NF consumer must perform a "discovery" process whereby the NF consumer 302 determines the identity of a potential NF producer 304. In a conventional discovery process, the client 302 sends a discovery request to the authorization server 300. The discovery request indicates the type of NF service that the client 302 is seeking. The authorization server 300 sends a discovery response to the client 302. The discovery response includes the identity of an appropriate server 304, e.g., an NF that provides the desired NF service. The server 304 may be identified by IP address and port, for example.

For figures that illustrate conventional methods of authorization, the prior-performed discovery process is omitted for clarity.

### Problems with existing solutions

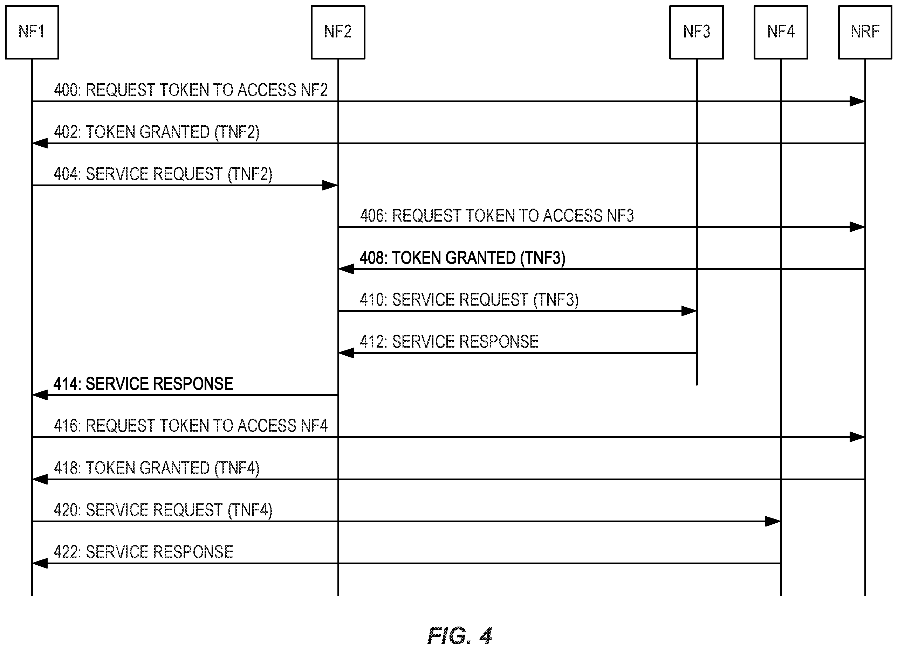

Figure 4 illustrates an example of a conventional 3GPP procedure, such as a UE registration, that involves multiple service requests. For the purpose of illustration, Figure 4 shows a generic procedure that involves the actions and interactions among several NFs, labeled "NF1," "NF2," "NF3," and "NF4," and an authorization server, such as an NRF. In the example procedure illustrated in Figure 4, NF1 calls a service in NF2, which triggers NF2 to call a service in NF3; NF3 sends a response to NF2, which forwards that response to NF1; after receiving the response from NF2, NF1 calls a service in NF4 to finish the procedure. To perform these steps, a number of signaling messages will be exchanged:

The process starts with NF1 sending a message to the NRF requesting access to NF2 (step 400). This may also be referred to herein as "requesting a token to access NF2," and the message may be referred to herein as "a token request to access NF2."

The NRF responds by granting a token to access NF2 (step 402). In Figure 4, the token is referred to as "TNF2." This response may also be referred to herein as "granting access to NF2."

NF1 then requests access to the service provided by NF2 by sending token TNF2 in a service request to NF2 (step 404). In this example, NF2 requires the services of NF3, and so NF2 sends a message to the NRF requesting access to NF3 (step 406), and the NRF responds by granting a token, labeled "TNF3" in Figure 4, to be used by NF2 to access NF3 (step 408). NF2 then requests access to the service provided by NF3 by sending token TNF3 to NF3 (step 410), and NF3 provides a service response to NF2 (step 412). NF2 then provides a service response to NF1 (step 414).

NF1 next sends a message to the NRF requesting access to NF4 (step 416), and the NRF responds by granting an access token, labeled "TNF4" in Figure 4 (step 418). NF1 then requests access to the service provided by NF4 by sending token TNF4 to NF4 (step 420). NF4 then provides a service response to NF1 (step 422).

As the example illustrated in Figure 4 makes clear, the whole procedure requires three access token requests (step 400, step 406, and step 416, respectively), which increases the number of signaling messages and increases time overhead. The authorization steps add latency at least in cases where there is not already an existing access token, e.g., for the first execution of a procedure on a given dynamically created instance of a service or when - for security reasons - tokens cannot be reused across procedure invocations. A conventional process would have also performed three service discovery requests (not shown in Figure 4 for clarity) prior to the access token requests.

Document CN 108632216 A may be construed to disclose a network function authorization method, an apparatus, a readable storage medium and an entity device, relating to the field of communication technology. The network function authorization method comprises: obtaining authorization verification information sent by a first network function NF entity, said authorization verification information carrying instance attribute information of the first NF entity; performing authorization verification of service access requested by said first NF entity based on the service authorization information of the second NF entity and said authorization verification information, and providing information on the result of the verification back to said first NF entity; said service authorization information is used to indicate an NF instance that is allowed to access a predetermined service of the second NF entity

Document US 2018/270778 A1 may be construed to disclose methods, electronic devices, and computer readable media for application function (AF) protocol data unit (PDU) session management and subscription procedures. A method for a method for PDU session management includes initiating a PDU session for an application function (AF) within an application server (AS) that is not part of a cellular network and sending configuration information to a network exposer function (NEF) to communicate directly with a network function (NF) of the cellular network to provide services for the PDU session. The method additionally includes receiving authorization from the NEF and communicating directly with the cellular network NF to provide the PDU services during the PDU session.

### Summary

Methods and systems for flexible authorization in Fifth Generation (5G) service based core network are herein provided. As disclosed herein, a Network Function (NF) service consumer may issue an authorization request, e.g., a token request, identifying a procedure and receive either a single token that authorizes the NF consumer to multiple NF producers or a set of tokens which authorize the NF consumer to various NF producers, which reduces the number of token requests that must be made, reduces the total latency of the Third Generation Partnership Project (3GPP) procedure, enhances the processing capacity of the service-based core network, and reduces network traffic.

The invention is defined by methods, a network node and a non-transitory computer readable medium according to the independent claims. Further developments are set forth in the dependent claims.

According to one aspect of the present disclosure, a method, implemented in a NF for optimizing NF service authorization comprises: sending, to an authorization server, an authorization request for a procedure that involves a plurality of NF services; and receiving, from the authorization server, an authorization response for the procedure, the authorization response including information authorizing access to the plurality of NF services.

In some embodiments, sending the authorization request to an authorization server comprises sending the authorization request to a Network Repository Function (NRF).

In some embodiments, receiving the authorization response including information authorizing access to the plurality of NF services comprises receiving at least one token for authorizing access to the plurality of NF services.

In some embodiments, the received authorization response comprises one token that is used to access at least some of the plurality of NF services.

In some embodiments, the method further comprises sending, to each of a plurality of NF producers, a service request for the respective NF service, each service request comprising the one token.

In some embodiments, the method further comprises receiving, from each of the plurality of NF producers, a service response for the respective NF service.

In some embodiments, the received authorization response comprises a plurality of tokens, each token for accessing a respective one of the plurality of NF services.

In some embodiments, the method further comprises sending, to each of a plurality of NF producers, a service request for the respective NF service, each service request comprising a different token from the received plurality of tokens.

In some embodiments, the method further comprises receiving, from each of the plurality of NF producers, a service response for the respective NF service.

In some embodiments, the method further comprises providing at least one of the plurality of tokens to one of the plurality of NF producers for use by that NF producer to access another of the plurality of NF producers.

According to one aspect of the present disclosure, a method, implemented in a NF for optimizing NF service authorization comprises: receiving, from an NF service consumer, a service request, the service request comprising information authorizing access to a plurality of NF services; sending, to the NF service consumer, a service response.

In some embodiments, receiving the service request comprising information authorizing access to a plurality of NF services comprises receiving at least one token for authorizing access to the plurality of NF services.

In some embodiments, the received service request comprises one token that is used to access at least some of the plurality of NF services.

In some embodiments, the method further comprises sending, to at least one NF producer, a service request for the respective NF service provided by the respective NF producer, each service request comprising the one token.

In some embodiments, the method further comprises receiving, from each of the at least one NF producers, a service response for the respective NF service.

In some embodiments, the received service request comprises a plurality of tokens, each token for accessing a respective one of the plurality of NF services.

In some embodiments, the method further comprises sending, to at least one NF producer, a service request for the respective NF service provided by the respective NF producer, each service request comprising a respective one of the plurality of tokens.

In some embodiments, the method further comprises receiving, from each of the at least one NF producers, a service response for the respective NF service.

In some embodiments, the method further comprises receiving, from an authorization server, at least one additional token for authorizing access to one of the plurality of NF services.

In some embodiments, the method further comprises sending, to at least one NF producer, a service request for the respective NF service provided by the respective NF producer, the service request comprising the additional token received from the authorization server.

In some embodiments, the method further comprises receiving, from each of the at least one NF producers, a service response for the respective NF service.

According to one aspect of the present disclosure, a method, implemented in an authorization server, for optimizing NF service authorization comprises: receiving, from a requesting entity, an authorization request for a procedure that involves a plurality of NF services; authorizing the requesting entity, and, upon a determination that the requesting entity is authorized to perform the procedure, sending, to the requesting entity, an authorization response, the authorization response including information authorizing access to the plurality of NF services.

In some embodiments, the authorization server comprises a NRF.

In some embodiments, the requesting entity comprises a NF consumer and/or producer.

In some embodiments, sending the authorization response including information authorizing access to the plurality of NF services comprises sending at least one token for authorizing access to the plurality of NF services.

In some embodiments, sending the authorization response comprises sending one token that is used to access at least some of the plurality of NF services.

In some embodiments, sending the authorization response comprises sending a plurality of tokens, each token for accessing a respective one of the plurality of NF services.

In some embodiments, at least one of the plurality of tokens provided to the requesting entity is to be provided by the requesting entity to one of the plurality of NF producers for use by that one NF producer to access another of the plurality of NF producers.

In some embodiments, the method further comprises sending at least one additional token for authorizing access to one of the plurality of NF services.

According to one aspect of the present disclosure, a method, implemented in a first authorization server, for optimizing NF service authorization comprises: receiving, from a requesting entity, an authorization request for a procedure that involves a plurality of NF services; authorizing the requesting entity, and, upon a determination that the requesting entity is authorized to perform the procedure: determining that the requesting entity is a roaming entity, and, upon a determination that the requesting entity is a roaming entity: forwarding the authorization request to a second authorization server, the second authorization server being in the home network of the roaming entity; receiving a first authorization response from the second authorization; and sending, to the requesting entity, a second authorization response, the second authorization response including information authorizing access to the plurality of NF services.

In some embodiments, at least one of the first authorization server and the second authorization server comprises a NRF.

In some embodiments, the method further comprises performing an NF service discovery and generating an NF service discovery response, and forwarding the authorization request to the second authorization server further comprises forwarding the generated NF service discovery response to the second authorization server.

In some embodiments, sending the second authorization response comprises sending at least a portion of the first authorization response.

In some embodiments, sending the second authorization response including information authorizing access to the plurality of NF services comprises sending at least one token for authorizing access to the plurality of NF services.

In some embodiments, sending the authorization response comprises sending one token that is used to access at least some of the plurality of NF services.

In some embodiments, sending the authorization response comprises sending a plurality of tokens, each token for accessing a respective one of the plurality of NF services.

In some embodiments, the method further comprises sending at least one additional token for authorizing access to one of the plurality of NF services.

According to one aspect of the present disclosure, a method, implemented in a first authorization server, for optimizing NF service authorization comprises: receiving, from a requesting entity, an authorization request for a procedure that involves a plurality of NF services; authorizing the requesting entity, and, upon a determination that the requesting entity is authorized to perform the procedure: generating an authorization response, the authorization response including information authorizing access to at least one NF service; determining that the requesting entity is a second authorization server, the second authorization server being in a visited network, and, upon a determination that the requesting entity is a second authorization server in a visited network, sending the authorization response to the second authorization server in the visited network.

In some embodiments, at least one of the first authorization server and the second authorization server comprises a NRF.

In some embodiments, the authorization request for the procedure that involves a plurality of NF services further comprises an NF service discovery response for an NF service discovery that was performed by the second authorization server.

In some embodiments, sending the authorization response including information authorizing access to at least one NF service comprises sending at least one token for authorizing access to the at least one NF service.

In some embodiments, sending the authorization response comprises sending one token that is used to access at least some of the plurality of NF services.

In some embodiments, sending the authorization response comprises sending a plurality of tokens, each token for accessing a respective one of at least some of the plurality of NF services.

In some embodiments, the method further comprises sending at least one additional token for authorizing access to one of the at least one NF service.

According to one aspect of the present disclosure, a network node for performing optimized NF service authorization, the network node comprising: a network interface; one or more processors; and memory storing instructions executable by the one or more processors, whereby the network node is operable to perform any of the methods described herein.

According to one aspect of the present disclosure, a network node for performing optimized NF service authorization, the network node being adapted to perform any of the methods described herein.

According to one aspect of the present disclosure, a network node for performing optimized NF service authorization, the network node comprising means for performing any of the methods described herein.

According to one aspect of the present disclosure, a network node for performing optimized NF service authorization, the network node comprising one or more modules operable to perform any of the methods described herein.

According to one aspect of the present disclosure, a non-transitory computer readable medium storing software instructions that when executed by one or more processors of a network node for performing optimized NF service authorization, cause the network node to perform any of the methods described herein.

According to one aspect of the present disclosure, a computer program comprising instructions which, when executed by at least one processor, cause the at least one processor to perform any of the methods described herein.

According to one aspect of the present disclosure, a carrier comprising the computer program above, wherein the carrier is one of an electronic signal, an optical signal, a radio signal, or a computer readable storage medium.

### Brief Description of the Drawings

The accompanying drawing figures incorporated in and forming a part of this specification illustrate several aspects of the disclosure, and together with the description serve to explain the principles of the disclosure.
Figure 1 illustrates a conventional wireless communication system represented as a Fifth Generation (5G) Core Network (5GC) architecture composed of core Network Functions (NFs), where interaction between any two NFs is represented by a point-to-point reference point/interface;
Figure 2 illustrates a 5G network architecture using service-based interfaces between the NFs in the control plane instead of the point-to-point reference points/interfaces used in the 5G network architecture of Figure 1;
Figure 3 illustrates an overview of the conventional procedure of making a service request with an access token;
Figure 4 illustrates an example of a conventional Third Generation Partnership Project (3GPP) procedure that involves multiple service requests;
Figure 5 illustrates one example of a cellular communications network according to some embodiments of the present disclosure;
Figure 6 illustrates an exemplary procedure-based authorization according to some embodiments of the present disclosure, in which a single token is used to access multiple NFs;
Figure 7 illustrates an exemplary procedure-based authorization according to some embodiments of the present disclosure, in which multiple tokens are used to access multiple NFs;
Figure 8 illustrates an exemplary procedure-based authorization according to some embodiments of the present disclosure, in which tokens may be pushed to NFs;
Figure 9 is a flow chart illustrating an exemplary process, performed at an NF, for procedure-based authorization according some embodiments of the present disclosure;
Figure 10 illustrates a conventional authorization of a roaming NF service consumer;
Figure 11 illustrates an exemplary procedure-based authorization used in a roaming scenario according to some embodiments of the present disclosure;
Figure 12 is a schematic block diagram of a radio access node according to some embodiments of the present disclosure;
Figure 13 is a schematic block diagram that illustrates a virtualized embodiment of the radio access node of Figure 12 according to some embodiments of the present disclosure;
Figure 14 is a schematic block diagram of the radio access node of Figure 12 according to some other embodiments of the present disclosure;
Figure 15 is a schematic block diagram of a User Equipment device (UE) according to some embodiments of the present disclosure;
Figure 16 is a schematic block diagram of the UE of Figure 15 according to some other embodiments of the present disclosure;
Figure 17 illustrates a telecommunication network connected via an intermediate network to a host computer in accordance with some embodiments of the present disclosure;
Figure 18 is a generalized block diagram of a host computer communicating via a base station with a UE over a partially wireless connection in accordance with some embodiments of the present disclosure;
Figure 19 is a flowchart illustrating a method implemented in a communication system in accordance with some embodiments of the present disclosure;
Figure 20 is a flowchart illustrating a method implemented in a communication system in accordance with some embodiments of the present disclosure;
Figure 21 is a flowchart illustrating a method implemented in a communication system in accordance with some embodiments on the present disclosure; and
Figure 22 is a flowchart illustrating a method implemented in a communication system in accordance with some embodiments of the present disclosure.

### Detailed Description

Methods and systems for flexible authorization in Fifth Generation (5G) service based core network are herein provided. As disclosed herein, a Network Function (NF) service consumer may issue an authorization request, e.g., a token request, identifying a procedure and receive either a single token that authorizes the NF server to multiple NF producers or a set of tokens which authorize the NF server to various NF producers, which reduces the number of token requests that must be made, reduces the total latency of the Third Generation Partnership Project (3GPP) procedure, enhances the processing capacity of the service-based core network, and reduces network traffic.

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless device.

**Radio Access Node:** As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) Base Station (gNB) in a Third Generation Partnership Project (3GPP) 5G NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

**Core Network Node:** As used herein, a "core network node" is any type of node in a core network. Some examples of a core network node include, e.g., a Mobility Management Entity (MME), a Packet Data Network Gateway (P-GW), a Service Capability Exposure Function (SCEF), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

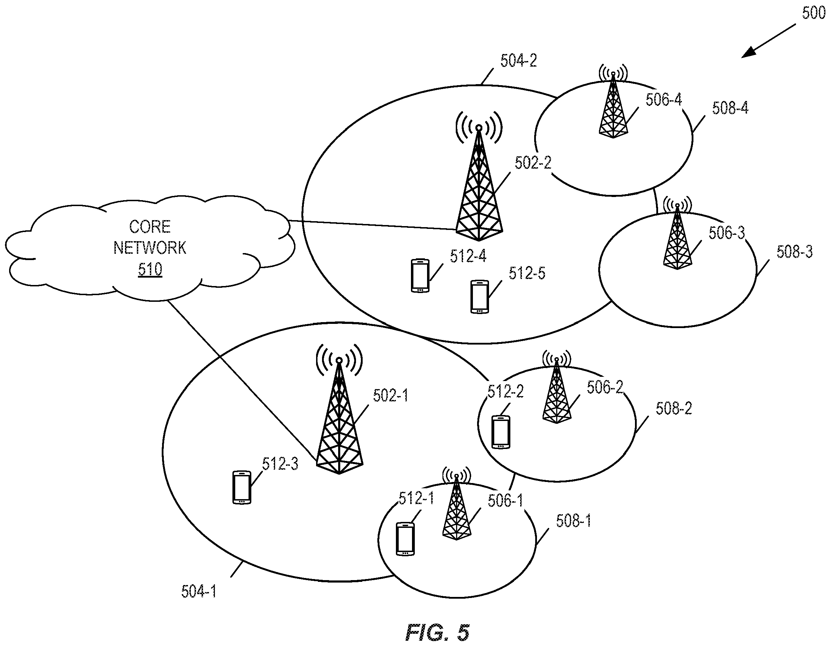

Figure 5 illustrates one example of a cellular communications network 500 according to some embodiments of the present disclosure. In the embodiments described herein, the cellular communications network 500 is a 5G NR network. In this example, the cellular communications network 500 includes base stations 502-1 and 502-2, which in LTE are referred to as eNBs and in 5G NR are referred to as gNBs, controlling corresponding macro cells 504-1 and 504-2. The base stations 502-1 and 502-2 are generally referred to herein collectively as base stations 502 and individually as base station 502. Likewise, the macro cells 504-1 and 504-2 are generally referred to herein collectively as macro cells 504 and individually as macro cell 504. The cellular communications network 500 may also include a number of low power nodes 506-1 through 506-4 controlling corresponding small cells 508-1 through 508-4. The low power nodes 506-1 through 506-4 can be small base stations (such as pico or femto base stations) or Remote Radio Heads (RRHs), or the like. Notably, while not illustrated, one or more of the small cells 508-1 through 508-4 may alternatively be provided by the base stations 502. The low power nodes 506-1 through 506-4 are generally referred to herein collectively as low power nodes 506 and individually as low power node 506. Likewise, the small cells 508-1 through 508-4 are generally referred to herein collectively as small cells 508 and individually as small cell 508. The base stations 502 (and optionally the low power nodes 506) are connected to a core network 510, e.g., the core network shown in Figure 1 or Figure 2.

The base stations 502 and the low power nodes 506 provide service to wireless devices 512-1 through 512-5 in the corresponding cells 504 and 508. The wireless devices 512-1 through 512-5 are generally referred to herein collectively as wireless devices 512 and individually as wireless device 512. The wireless devices 512 are also sometimes referred to herein as UEs.

### Procedure-Based Authorization Overview

A procedure-based authorization is herein disclosed, in which a NF service consumer may issue an authorization request, e.g., a token request, identifying a procedure and receive either a single token that authorizes the NF server to multiple NF producers or a set of tokens which authorize the NF server to various NF producers. In some embodiments, when a system procedure begins, the first involved NF consumer will send the access token request on behalf of the procedure to Network Repository Function (NRF). Then the NRF will grant an access token that can be used by some or all of the NFs involved in the procedure.

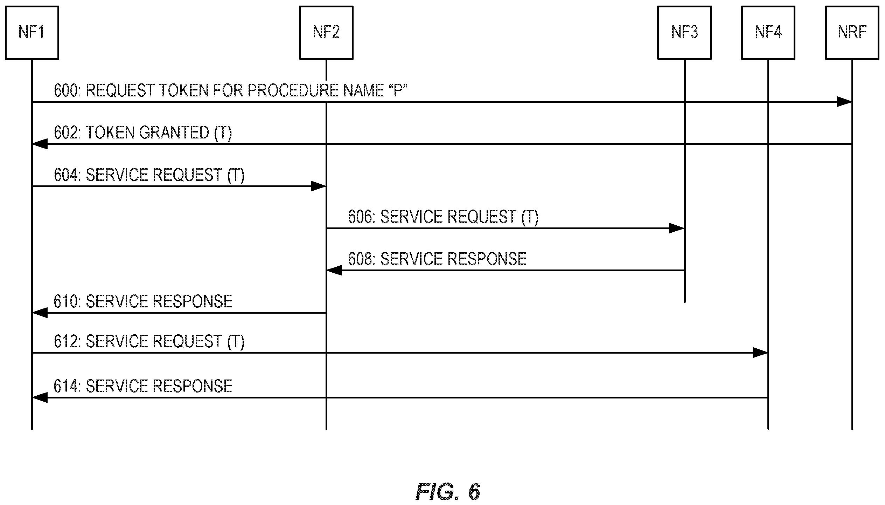

Figures 6 through 8 illustrate exemplary procedure-based authorization according to some embodiments of the present disclosure. For the purpose of illustration, these figures describe a generic procedure that involves the actions and interactions among several NFs, labeled "NF1," "NF2," "NF3," and "NF4," and an authorization server, such as an NRF. In these examples, access authorization involves the use of a token that is provided by the NRF and used by one NF to access services at another NF.

Although omitted from Figures 6, 7, and 8, for clarity, it will be understood that when an entity receives a request that warrants some response, that entity may perform an authentication and/or authorization step and take action accordingly. For example, that entity may reject or ignore a request that comes from a source that cannot be authenticated and/or from a source that is not authorized to make such a request.

### Single Token

Figure 6 illustrates an exemplary procedure-based authorization according to some embodiments of the present disclosure, in which a single token is used to access multiple NFs. In the example procedure illustrated in Figure 6, NF1 requests an access token for use while performing one or more steps of a procedure (step 600). In some embodiments, the request may identify the procedure by name. In the example illustrated in Figure 6, the request identifies a procedure named "P." The NRF receives this request, authorizes NF1 and checks which NFs are involved in the procedure. In this example, network functions NF2, NF3, and NF4 are involved in the procedure P. The NRF then generates an access token, labeled "T" in Figure 6, for the procedure, and sends that token to NF1 (step 602). In this embodiment, the single token T provides access to NF2, NF3, and NF4. NF1 then sends a service request to NF2 with the token T (step 604). In the embodiment illustrated in Figure 6, NF2 uses the same token T to access NF3 (steps 606 and 608), and sends a service response back to NF1 (step 610). NF1 then uses the same token T to access NF4 (steps 612 and 614).

It can be seen in Figure 6 that, by using procedure-based access tokens, the overhead of individual access token requests can be dramatically reduced. However, the token validity scope may be expanded in an unexpected way. In the example procedure illustrated in Figure 6, consider a scenario in which by policy, NF1 cannot access NF3, but can only access NF2 and NF4. In this scenario, if NF1 requests an access token for the whole procedure, there is the possibility that NF1 might try to use that token to access NF3. In some embodiments, in order to avoid this possibility the token can include claims stating which NF can access which NF according to the procedure. In the above example, the access token could contain the following claims: "NF1 can access NF2 and NF4," and "NF2 can access NF3." The token claims are not limited to the example form above, but could be in any form or format. In this manner, if NF1 uses the token to access NF3, then NF3 will reject the request, since the corresponding claim is not included in the token.

Note that, in a cloud native implementation, each type of NF may have multiple instances, in which case the claim of the token provided by the NRF might state specific NF instance ID(s). For example, the claim might include the following information: "NF1 {instance ID1} can access NF2 {instance ID1, instance ID3} and NF4 {instance ID2}," "NF2 {instance ID1, instance ID3} can access NF3 {instance ID1}," and so on. In some embodiments, if there is no specific instance ID stated in the claim for a given type of NF, then it means that the token is applicable to any instance of that type of NF.

### Multiple Tokens

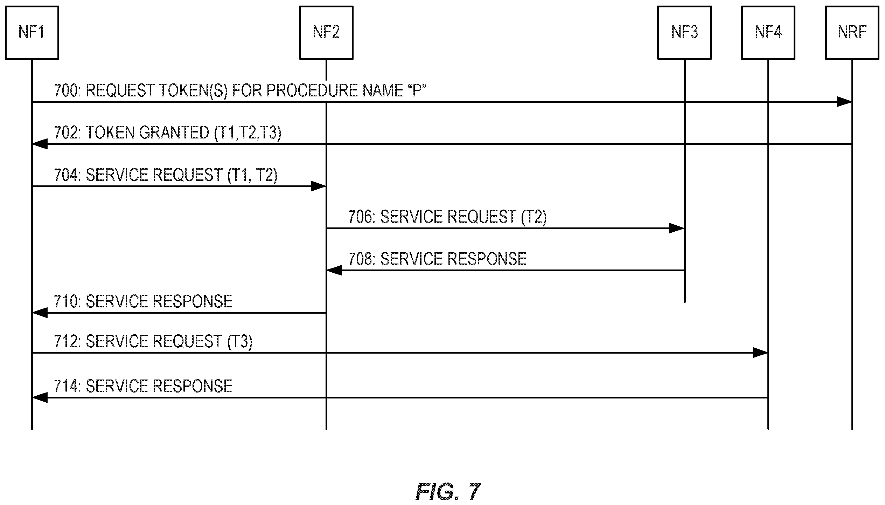

Figure 7 illustrates an exemplary procedure-based authorization according to some embodiments of the present disclosure, in which multiple tokens are used to access multiple NFs. In the example procedure illustrated in Figure 7, NF1 requests access token(s) for use while performing one or more steps of a procedure, identified by name "P" (step 700). The NRF receives this request, authorizes NF1 and checks which NFs are involved in the procedure. In this example, network functions NF2, NF3, and NF4 are involved in the procedure P. The NRF then generates a set of access tokens, labeled "T1," "T2," and "T3" for the procedure, and sends those tokens to NF1 (step 702). In the embodiment illustrated in Figure 7, NF1 then sends a service request to NF2 with token T1, for access to NF2, and with token T2, which NF2 will use to access NF3 (step 704). In an alternative embodiment, NF1 may include all of the tokens received (e.g., T1, T2, and T3) in the service request to NF2. In the embodiment illustrated in Figure 7, NF2 uses token T2 to access NF3 (steps 706 and 708), and sends a service response back to NF1 (step 710). In the embodiment illustrated in Figure 7, NF1 then uses the token T3 to access NF4 (steps 712 and 714). In alternative embodiments, NF1 may include all of the tokens received (e.g., T1, T2, and T3) in the service request to NF4. In some embodiments, each token granted in step 702 may have claims that specify which NF the token is to be used with and/or what NF services may be access with that token.

### Direct Pushing of Tokens

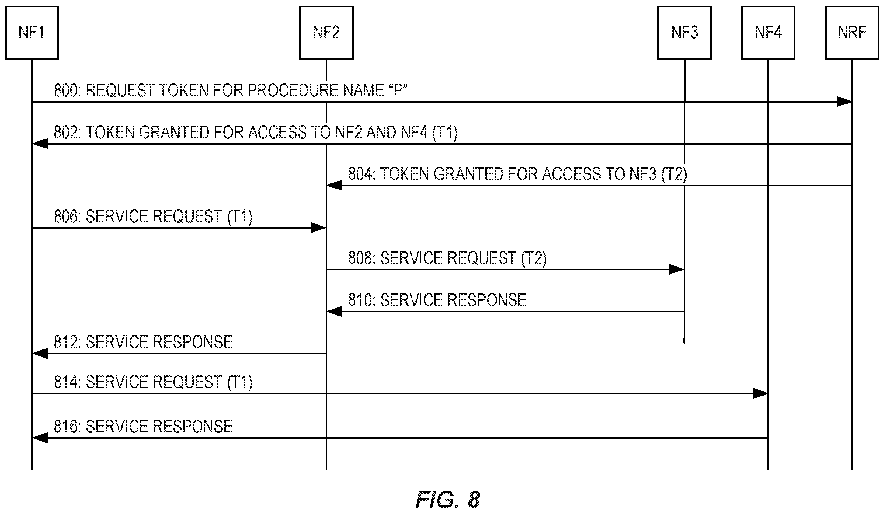

Figure 8 illustrates an exemplary procedure-based authorization according to some embodiments of the present disclosure, in which tokens may be pushed to NFs. In the example procedure illustrated in Figure 8, NF1 requests access token(s) for use while performing one or more steps of a procedure, identified by name "P" (step 800). The NRF receives this request, authorizes NF1 and checks which NFs are involved in the procedure. In this example, network functions NF2, NF3, and NF4 are involved in the procedure P. The NRF then generates a token, labeled "T1," for accessing NF2 and NF4 (step 802). In the embodiment illustrated in Figure 8, in anticipation of NF2's need to access NF3, the NRF sends NF2 a token, labeled "T2," for accessing NF3 (step 804). Because NF2 did not request the token T2, this may be referred to as a unilateral action by the NRF, and may be implemented using a "push" mechanism. NF1 then sends a service request to NF2 with token T1, for access to NF2 (step 806). In the embodiment illustrated in Figure 8, NF2 uses token T2 to access NF3 (steps 808 and 810), and sends a service response back to NF1 (step 812). NF1 then uses the token T1 to access NF4 (steps 814 and 816).

This alternative, in which the NRF provides the NF1 with a token that allows NF1 access only to NF2 and NF4, and in which the NRF provides the NF2 with a token that allows NF2 access only to NF3, is yet another way to prevent token misuse. NF1 never receives a token that might be used to access NF3, effectively preventing NF1 from mistakenly or maliciously accessing NF3.

To push a token to an NF instance, the NRF may need to know the end point information for the corresponding NF instance. In some embodiments, this information can be registered in the NF registration procedure. For example, when an NF instance registers itself to NRF, it can tell the NRF where to push an access token, e.g., the NF instance may provide the NRF with the Internet Protocol (IP) address and the port number of the NF instance. The transport protocol for the pushing could be Transport Layer Security (TLS), Quick User Datagram Protocol (UDP) Internet Connections (QUIC), or other suitable protocol.

### "Discovery-Less" Authorization

It should be noted that the authorization requests, such as step 600 in Figure 6, step 700 in Figure 7, step 800 in Figure 8, and the like, may act as an implied discovery request, especially when the token or tokens provided by the NRF include claims, tags, or other information that identifies a particular NF required by the procedure - information that the requesting NF would conventionally get by issuing a discovery request prior to issuing the authorization request. Thus, in some embodiments, the authorization request may obviate the need for a prior discovery request. This approach is herein referred to as a "discovery-less" authorization. Alternatively, the token requests may be preceded by a discovery request as is conventionally done.

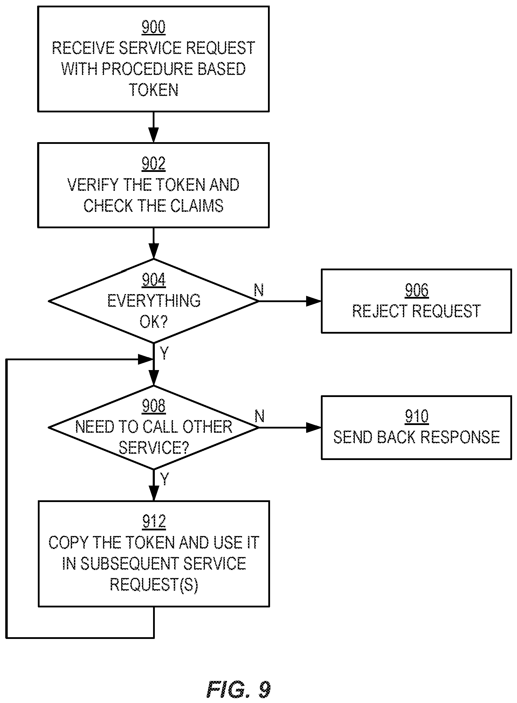

Figure 9 is a flow chart illustrating an exemplary process, performed at an NF, for procedure-based authorization according some embodiments of the present disclosure. This process may be used, for example, by NF2 in Figure 6. In the embodiment illustrated in Figure 9, a service request with a procedure based token is received by an NF (step 900). In this example, the token includes claims, and so the NF verifies the token and checks the claims (step 902). If the token cannot be verified as authentic, or if the token is verified as being authentic but the claims prohibit the token's use by the NF (step 904), the NF will reject the request (step 906). Otherwise, the token will be used. In the embodiment illustrated in Figure 9, the NF checks to see whether or not it needs to call another NF service (step 908). If not, the NF sends back the response (step 910) and the process completes. If the NF does need to call another service, the NF copies the token and uses it in subsequent service requests (step 912). This continues until the NF no longer needs to call another NF service (step 908), at which time the NF responds to the original service request (step 910) and the process completes.

In some embodiments, in the access token request, the NF consumer can include the procedure name into the access token scope defined in the OAuth 2.0. The access token scope is just a set of strings. For example, if the NF consumer wants to get the procedure-based access token, it includes the procedure name, e.g., "UE attachment," into the token scope field. The NRF (authorization server) can decide whether to accept the scope in the request or not. If the NRF does not accept the scope, e.g., due to some policy issue, then it may grant the token only for the NF consumer to access the next service in the procedure. If the NRF just grants an access token for a single service call rather than a procedure-based token, then it will inform that in the scope field of the token response. Naturally, both the NF and NRF need to have the same understanding of the procedures and what they contain, i.e., the procedures need to be well defined at both ends. When the NF consumer receives the token response, it checks the token scope field. If the token is not a procedure-based token, then it will use the token for only accessing the next service in the procedure.

### Authorization during Roaming

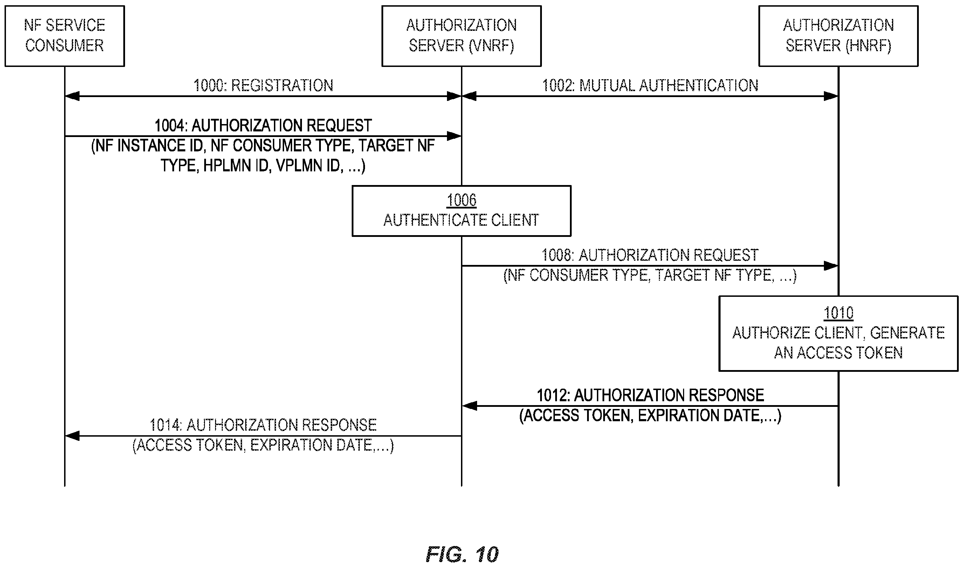

Roaming - where a device belonging to a subscriber to one network (referred to as the "home" network) is operating in another network (referred to as the "visited" network) - requires specific interactions between an authorization server in the visited network and an authorization server in the home network. An example of this is shown in Figure 10.

Figure 10 illustrates a conventional process by which an NF service consumer, which is an entity roaming within a Visited Public Land Mobile Network, or "VPLMN," requests authorization to access a NF service that may be in the VPLMN or in the Home PLMN, or "HPLMN." In Figure 10, the VPLMN and HPLMN each include an NRF as the authorization server. The NRF in the visited network is herein referred to as the "VNRF" and the NRF in the home network is herein referred to as the "HNRF." In the example shown in Figure 10, authorization is provided in the form of access tokens.

A roaming entity must register its presence with the visited authorization server, VNRF (step 1000). This registration typically involves an interaction between the VNRF and the HNRF, which involves mutual authentication (step 1002). When the roaming NF service consumer desires to access an NF service, it sends an authorization request to the VNRF (step 1004). In the example illustrated in Figure 10, the authorization request identifies the NF instance ID of the desired NF service (which may have been provided to the NF service consumer in response to a prior-performed NF service discovery request, not shown in Figure 10), the NF consumer type, and a target NF type, as well as information that identifies the HPLMN and the VPLMN. The VNRF receives the request and authenticates the client (step 1006). If the client is authenticated, the VNRF forwards the request to the HNRF (step 1008). The HNRF authorizes the client, and, if the client is authorized, generates an access token (step 1010), which it sends to the VNRF (step 1012). The VNRF forwards the access token to the NF service consumer (step 1014). In the conventional process illustrated in Figure 10, the initial authorization request (step 1004) identifies just one NF instance and receives just one token that provides access to that one NF instance.

### Authorization during Roaming - Individual Tokens

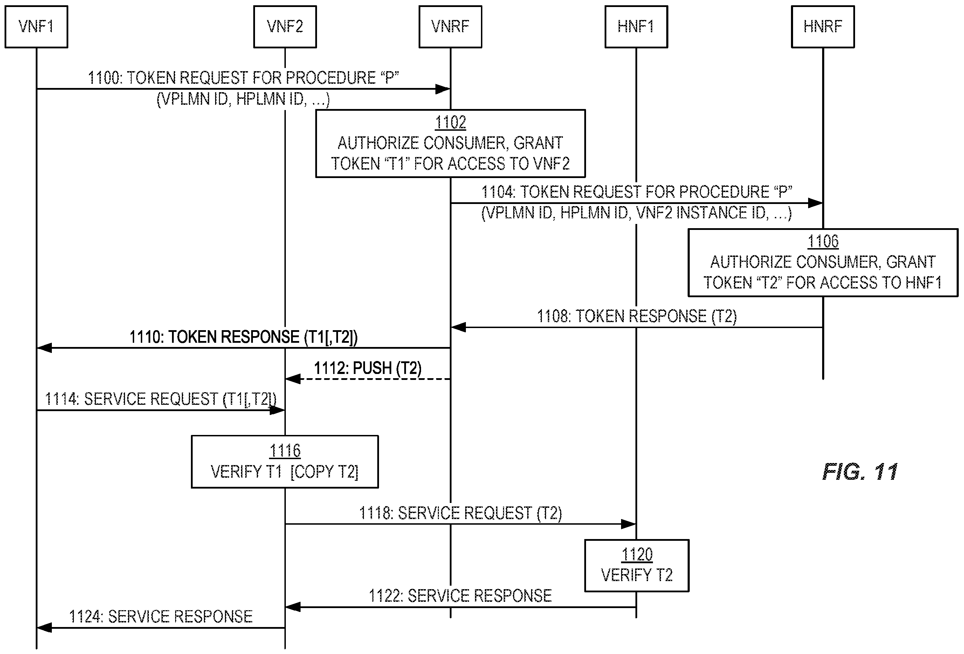

Figure 11 illustrates an exemplary procedure-based authorization used in a roaming scenario according to some embodiments of the present disclosure. Although not shown in Figure 11, the registration and mutual authentication shown in Figure 10 as steps 1000 and 1002 will have been done. In Figure 11, an authorization request is referred to as a token request and an authorization response is referred to as a token response. Figure 11 illustrates an interaction between a roaming NF (VNF1), another NF in the visited network (VNF2), an NRF in the visited network (VNRF), an NRF in the home network (HNRF), and a NF in the home network (HNF1). For the example illustrated in Figure 11, it is presumed that all authorizations shown in Figure 11 are successful, i.e., that the requesting entities are authorized to make the requests. Additional steps that might be taken in the event that the requesting entities are not authorized to make the respective requests are omitted from Figure 11 for clarity.

In the embodiment illustrated in Figure 11, VNF1 issues a token request for the purpose of accessing NF services associated with procedure "P" (step 1100). In the embodiment illustrated in Figure 11, the token request includes the VPLMN ID and the HPLMN ID. This request is received by the VNRF.

In the embodiment illustrated in Figure 11, one of the NF services associated with the procedure is produced by VNF2, and another of the NF services associated with the procedure is produced by HNF1. Thus, in the embodiment illustrated in Figure 11, the VNRF authorizes the NF consumer, VNF1, to access an NF service provided by VNF2, and grants a token, T1, for access to VNF2 (step 1102). In some embodiments, the token T1 may include claims that restrict the use of the token, T1; for example, the token, T1, may include a claim such as "VNF1 {instance 1} may access VNF2 {instance 2}" or similar.

The VNRF forwards the token request (step 1104) to HNRF. The VNRF should specify the NF instances in the VPLMN that will access the NF instance in the HPLMN. In the embodiment illustrated in Figure 11, for example, VNF2 will need to access HNF1 as part of the procedure; therefore, the forwarded token request also includes the VNF2 instance ID.

The HNRF authorizes the consumer, VNF1, to access an NF service provided by HNF1, and grants a token, T2, for use by VNF2 to access to HNF1 (step 1106). In some embodiments, the token, T2, may include claims that restrict the use of the token, T2; for example, the token, T2, may include a claim such as "VNF2 {instance 1} may access HNF1 {instance 2}" or similar. If HNF1 needs to access another NF as part of the procedure, for example HNF2 (not shown in Figure 11), then the token, T2, should also include a claim such as "HNF1 {instance 2} may access HNF2 {instance 1}," or similar.

The HNRF then sends token T2 in a token response to VNRF (step 1108). The VNRF sends its own token response to VNF1 (step 1110). In one embodiment, the response includes tokens T1 and T2. In an alternative embodiment, the token response sent by the VNRF to VNF1 at step 1110 includes only token T1, and the VNRF separately pushes token T2 to VNF2 in anticipation of VNF2's need for token T2 (step 1112).

VNF1 then issues a service request to VNF2 (step 1114). The service request includes at least token T1, and may also include token T2, if token T2 was included in the token response at step 1110. (If VNF2 received token T2 by a PUSH message in optional step 1112, the service request at step 1114 need not include token T2.)

VNF2 verifies token T1 to determine that VNF1 is authorized to access VNF2 (step 1116). If token T2 was included in the token response at step 1110, VNF1 copies token T2 from the token response for a later user. VNF2 can verify token T1 since token T1 was generated by the VNRF.

VNF2 then includes token T2 in a service request to HNF1 (step 1118). HNF1 verifies token T2 (step 1120) and sends a service response back to VNF2 (step 1122). HNF1 can verify token T2 since token T2 was generated by the HNRF. This service response is forwarded by VNF2 to VNF1 (step 1124).

In the embodiment illustrated in Figure 11, the VNRF generates a token for use by VNF1 to access VNF2, and the HNRF generates a token for use by VNF2 to access HNF1, which means that the token response at step 1110 includes multiple tokens, each token for accessing a separate NF, e.g., one token for allowing VNF1 to access VNF2 and another token for allowing VNF2 to access HNF1.

In an alternative embodiment, the procedure does not involve any NFs in the VPLMN, in which case the VNRF may simply forward the token request to the HNRF, receive the token response from the HNRF, and forward the token response to VNF1.

### Authorization during Roaming - Shared Token

In alternative embodiments, however, either one of the NRFs could provide enough information to the other NRF that one of the two NRFs could generate a single, shared token that could be used by VNF1 to access both VNF2 and HNF1. For example, if there exists a trust agreement between the VPLMN and the HPLMN, i.e., that NFs in both networks trust NRFs from both networks, then the NFs can get the public keys (for example) of the VNRF and HNRF to verify the shared token generated by either of them.

If the HNRF generates the shared token, then the VNRF should provide the HNRF sufficient detail about the procedure, e.g., that VNF1 will access VNF2, and that VNF2 will access HNF1. In this example, the VNRF should identify the specific instances of VNF1 and VNF2; the HNRF will know or choose the specific instance of HNF1. The HNRF will then have sufficient information to generate one token that may be used for the specific procedure involving specific instances of VNFs and HNFs.

If the VNRF generates the shared token, the VNRF should inform the HNRF which instance of VNF2 will request access to a specific NF service. The HNRF would then perform the discovery and authorization to choose an HNF, e.g., HNF1 in Figure 11, and provide the identity of HNF1 to the VNRF. The VNRF will then have sufficient information to generate a shared token that gives each NF the access needed to perform its respective part of the procedure. In the embodiment illustrated in Figure 11, for example, the shared token would grant VNF1 access to VNF2 and would grant VNF2 access to HNF1.

As can be seen in Figure 11, in the roaming scenario, some system procedures include both service access within a VPLMN and service access from a VPLMN to an HPLMN. For example, 3GPP TS 23.502, Version 15.4.0 presents a UE-requested Protocol Data Unit (PDU) session establishment for home-routed roaming scenarios, where the home an Access and Mobility Management Function (AMF) first access the Visited Session Management Function (VSMF) for PDU session context creation, then the VSMF will access the Home Session Management Function (HSMF) for PDU session context creation in the HPLMN.

### Discovery during Roaming

In contrast to conventional methods, where NF service discovery is performed prior to making an NF authorization request, in the procedure-based approach of the present disclosure the NF consumer making the initial authorization request for a procedure does not necessarily know which network - i.e., the VPLMN or the HPLMN - each of the NF producers will inhabit. Thus, in some embodiments, the NF consumer makes a token request or other authorization request without first having made a discovery request. In these embodiments, the VNRF, the HNRF, or both may make the discovery requests on behalf of the NF consumer that issued the procedure-based authorization request.

Thus, in some roaming scenarios, a VNRF may perform a discovery process and determine that one or more VNFs needed for the procedure are available. In some embodiments, the VNRF may then generate an authorization token (e.g., step 1102), which the VNRF may or may not send to the HNRF.

In other embodiments, however, the VNRF may forward its discovery response to the HNRF (e.g., step 1104). Where the discovery response identifies a VNF for a particular service, the HNRF may opt to try to find an HNF for that service (via its own NF service discovery) and use the HNF instance rather than the VNF instance. Where the discovery response identifies a VNF instance that needs to request an NF service from an HNF, as in the scenario illustrated in Figure 11, the HNRF may use the VNF instance to generate a token that specifies the particular VNF instance as the VNF instance authorized to access the HNF instance.

### Example Implementations

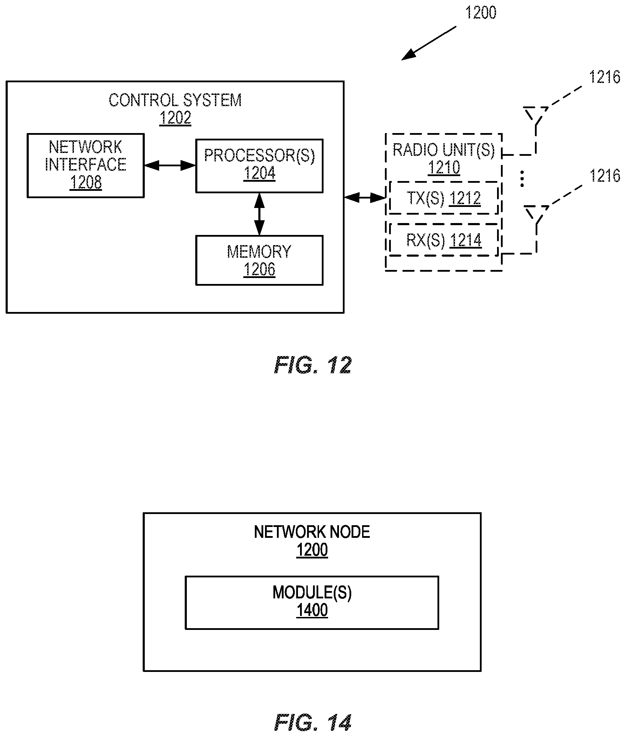

Figure 12 is a schematic block diagram of a radio access node 1200 according to some embodiments of the present disclosure. The radio access node 1200 may be, for example, a base station 502 or 506. As illustrated, the radio access node 1200 includes a control system 1202 that includes one or more processors 1204 (e.g., Central Processing Units (CPUs), Application Specific Integrated Circuits (ASICs), Field Programmable Gate Arrays (FPGAs), and/or the like), memory 1206, and a network interface 1208. The one or more processors 1204 are also referred to herein as processing circuitry. In addition, the radio access node 1200 includes one or more radio units 1210 that each includes one or more transmitters 1212 and one or more receivers 1214 coupled to one or more antennas 1216. The radio units 1210 may be referred to or be part of radio interface circuitry. In some embodiments, the radio unit(s) 1210 is external to the control system 1202 and connected to the control system 1202 via, e.g., a wired connection (e.g., an optical cable). However, in some other embodiments, the radio unit(s) 1210 and potentially the antenna(s) 1216 are integrated together with the control system 1202. The one or more processors 1204 operate to provide one or more functions of a radio access node 1200 as described herein. In some embodiments, the function(s) are implemented in software that is stored, e.g., in the memory 1206 and executed by the one or more processors 1204.

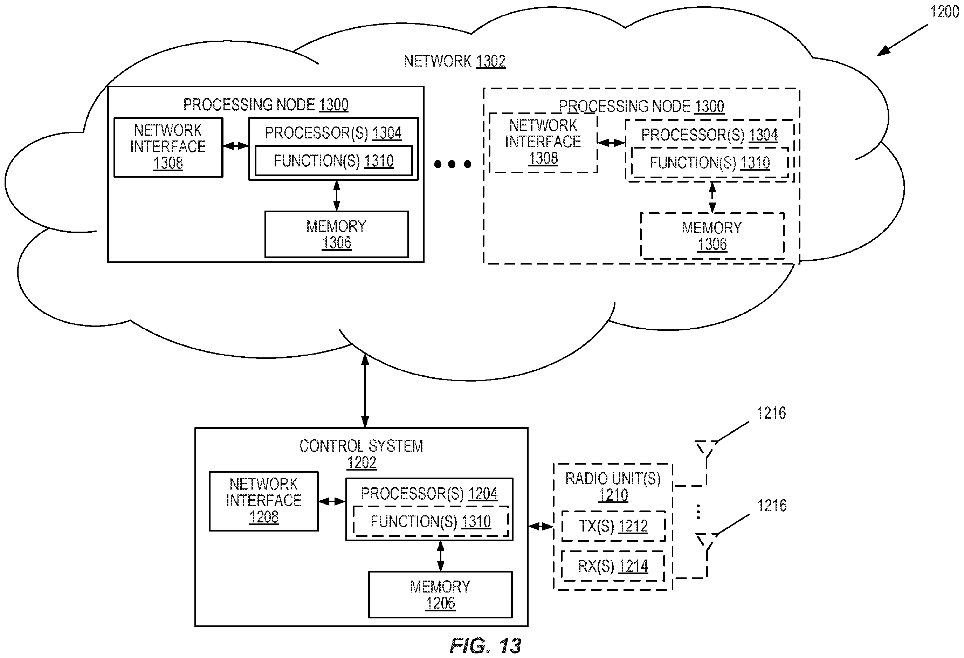

Figure 13 is a schematic block diagram that illustrates a virtualized embodiment of the radio access node 1200 according to some embodiments of the present disclosure. This discussion is equally applicable to other types of network nodes. Further, other types of network nodes may have similar virtualized architectures.

As used herein, a "virtualized" radio access node is an implementation of the radio access node 1200 in which at least a portion of the functionality of the radio access node 1200 is implemented as a virtual component(s) (e.g., via a virtual machine(s) executing on a physical processing node(s) in a network(s)). As illustrated, in this example, the radio access node 1200 includes the control system 1202 that includes the one or more processors 1204 (e.g., CPUs, ASICs, FPGAs, and/or the like), the memory 1206, and the network interface 1208 and the one or more radio units 1210 that each includes the one or more transmitters 1212 and the one or more receivers 1214 coupled to the one or more antennas 1216, as described above. The control system 1202 is connected to the radio unit(s) 1210 via, for example, an optical cable or the like. The control system 1202 is connected to one or more processing nodes 1300 coupled to or included as part of a network(s) 1302 via the network interface 1208. Each processing node 1300 includes one or more processors 1304 (e.g., CPUs, ASICs, FPGAs, and/or the like), memory 1306, and a network interface 1308.

In this example, functions 1310 of the radio access node 1200 described herein are implemented at the one or more processing nodes 1300 or distributed across the control system 1202 and the one or more processing nodes 1300 in any desired manner. In some particular embodiments, some or all of the functions 1310 of the radio access node 1200 described herein are implemented as virtual components executed by one or more virtual machines implemented in a virtual environment(s) hosted by the processing node(s) 1300. As will be appreciated by one of ordinary skill in the art, additional signaling or communication between the processing node(s) 1300 and the control system 1202 is used in order to carry out at least some of the desired functions 1310. Notably, in some embodiments, the control system 1202 may not be included, in which case the radio unit(s) 1210 communicate directly with the processing node(s) 1300 via an appropriate network interface(s).

In some embodiments, a computer program including instructions which, when executed by at least one processor, causes the at least one processor to carry out the functionality of radio access node 1200 or a node (e.g., a processing node 1300) implementing one or more of the functions 1310 of the radio access node 1200 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 14 is a schematic block diagram of the radio access node 1200 according to some other embodiments of the present disclosure. The radio access node 1200 includes one or more modules 1400, each of which is implemented in software. The module(s) 1400 provide the functionality of the radio access node 1200 described herein. This discussion is equally applicable to the processing node 1300 of Figure 13 where the modules 1400 may be implemented at one of the processing nodes 1300 or distributed across multiple processing nodes 1300 and/or distributed across the processing node(s) 1300 and the control system 1202.

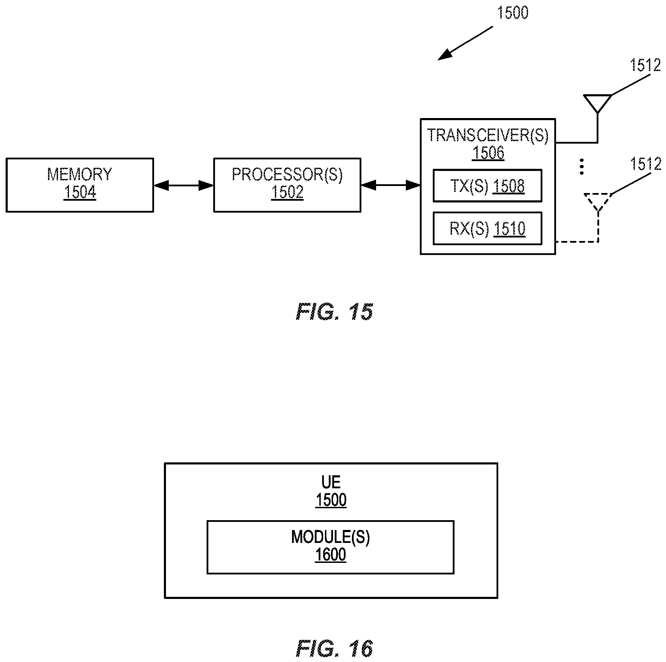

Figure 15 is a schematic block diagram of a UE 1500 according to some embodiments of the present disclosure. As illustrated, the UE 1500 includes one or more processors 1502 (e.g., CPUs, ASICs, FPGAs, and/or the like), memory 1504, and one or more transceivers 1506 each including one or more transmitters 1508 and one or more receivers 1510 coupled to one or more antennas 1512. The transceiver(s) 1506 includes radio-front end circuitry connected to the antenna(s) 1512 that is configured to condition signals communicated between the antenna(s) 1512 and the processor(s) 1502, as will be appreciated by on of ordinary skill in the art. The processors 1502 are also referred to herein as processing circuitry. The transceivers 1506 are also referred to herein as radio circuitry. In some embodiments, the functionality of the UE 1500 described above may be fully or partially implemented in software that is, e.g., stored in the memory 1504 and executed by the processor(s) 1502. Note that the UE 1500 may include additional components not illustrated in Figure 15 such as, e.g., one or more user interface components (e.g., an input/output interface including a display, buttons, a touch screen, a microphone, a speaker(s), and/or the like and/or any other components for allowing input of information into the UE 1500 and/or allowing output of information from the UE 1500), a power supply (e.g., a battery and associated power circuitry), etc.

In some embodiments, a computer program including instructions which, when executed by at least one processor, causes the at least one processor to carry out the functionality of the UE 1500 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 16 is a schematic block diagram of the UE 1500 according to some other embodiments of the present disclosure. The UE 1500 includes one or more modules 1600, each of which is implemented in software. The module(s) 1600 provide the functionality of the UE 1500 described herein.

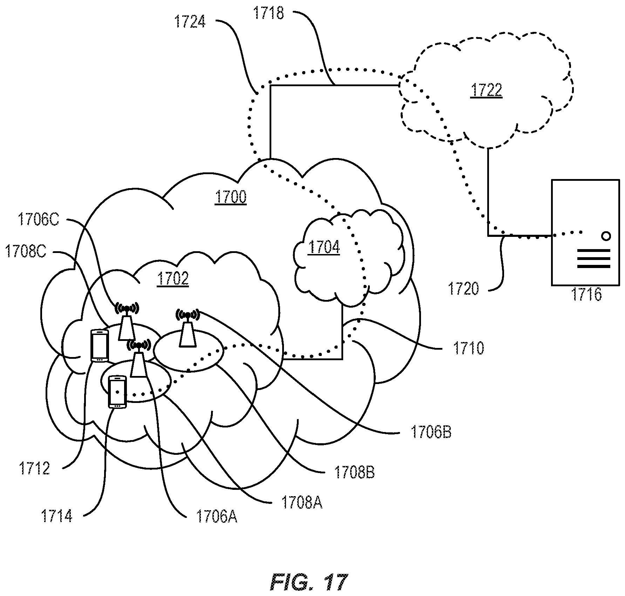

Figure 17 illustrates an exemplary telecommunication network connected via an intermediate network to a host computer according to some embodiments of the present disclosure. With reference to Figure 17, in accordance with an embodiment, a communication system includes a telecommunication network 1700, such as a 3GPP-type cellular network, which comprises an access network 1702, such as a RAN, and a core network 1704. The access network 1702 comprises a plurality of base stations 1706A, 1706B, 1706C, such as NBs, eNBs, gNBs, or other types of wireless Access Points (APs), each defining a corresponding coverage area 1708A, 1708B, 1708C. Each base station 1706A, 1706B, 1706C is connectable to the core network 1704 over a wired or wireless connection 1710. A first UE 1712 located in coverage area 1708C is configured to wirelessly connect to, or be paged by, the corresponding base station 1706C. A second UE 1714 in coverage area 1708A is wirelessly connectable to the corresponding base station 1706A. While a plurality of UEs 1712, 1714 are illustrated in this example, the disclosed embodiments are equally applicable to a situation where a sole UE is in the coverage area or where a sole UE is connecting to the corresponding base station 1706.

The telecommunication network 1700 is itself connected to a host computer 1716, which may be embodied in the hardware and/or software of a standalone server, a cloud-implemented server, a distributed server, or as processing resources in a server farm. The host computer 1716 may be under the ownership or control of a service provider, or may be operated by the service provider or on behalf of the service provider. Connections 1718 and 1720 between the telecommunication network 1700 and the host computer 1716 may extend directly from the core network 1704 to the host computer 1716 or may go via an optional intermediate network 1722. The intermediate network 1722 may be one of, or a combination of more than one of, a public, private, or hosted network; the intermediate network 1722, if any, may be a backbone network or the internet; in particular, the intermediate network 1722 may comprise two or more sub-networks (not shown).

The communication system of Figure 17 as a whole enables connectivity between the connected UEs 1712, 1714 and the host computer 1716. The connectivity may be described as an Over-the-Top (OTT) connection 1724. The host computer 1716 and the connected UEs 1712, 1714 are configured to communicate data and/or signaling via the OTT connection 1724, using the access network 1702, the core network 1704, any intermediate network 1722, and possible further infrastructure (not shown) as intermediaries. The OTT connection 1724 may be transparent in the sense that the participating communication devices through which the OTT connection 1724 passes are unaware of routing of uplink and downlink communications. For example, the base station 1706 may not or need not be informed about the past routing of an incoming downlink communication with data originating from the host computer 1716 to be forwarded (e.g., handed over) to a connected UE 1712. Similarly, the base station 1706 need not be aware of the future routing of an outgoing uplink communication originating from the UE 1712 towards the host computer 1716.

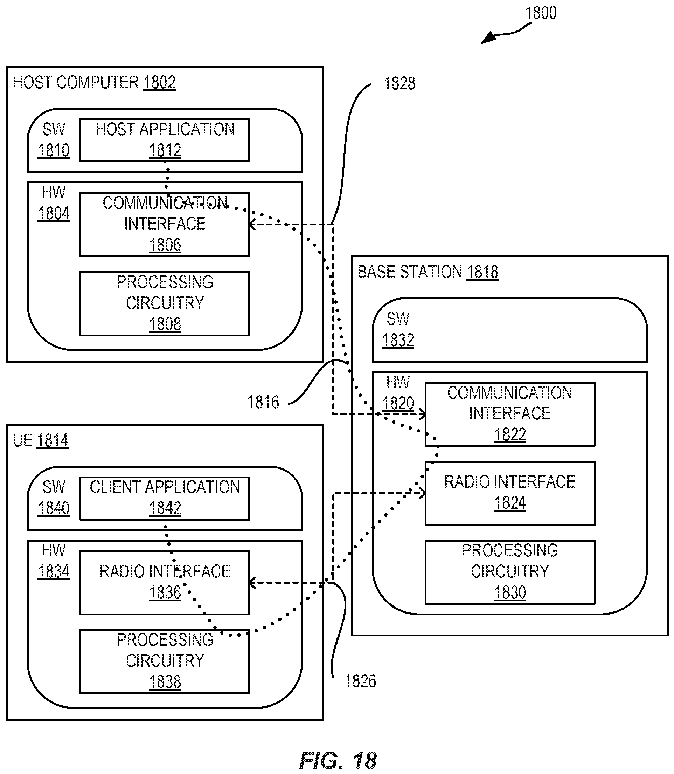

Figure 18 illustrates an exemplary generalized block diagram of a host computer communicating via a base station with a UE over a partially wireless connection in accordance with some embodiments of the present disclosure. Example implementations, in accordance with an embodiment, of the UE, base station, and host computer discussed in the preceding paragraphs will now be described with reference to Figure 18. In a communication system 1800, a host computer 1802 comprises hardware 1804 including a communication interface 1806 configured to set up and maintain a wired or wireless connection with an interface of a different communication device of the communication system 1800. The host computer 1802 further comprises processing circuitry 1808, which may have storage and/or processing capabilities. In particular, the processing circuitry 1808 may comprise one or more programmable processors, ASICs, FPGAs, or combinations of these (not shown) adapted to execute instructions. The host computer 1802 further comprises software 1810, which is stored in or accessible by the host computer 1802 and executable by the processing circuitry 1808. The software 1810 includes a host application 1812. The host application 1812 may be operable to provide a service to a remote user, such as a UE 1814 connecting via an OTT connection 1816 terminating at the UE 1814 and the host computer 1802. In providing the service to the remote user, the host application 1812 may provide user data which is transmitted using the OTT connection 1816.

The communication system 1800 further includes a base station 1818 provided in a telecommunication system and comprising hardware 1820 enabling it to communicate with the host computer 1802 and with the UE 1814. The hardware 1820 may include a communication interface 1822 for setting up and maintaining a wired or wireless connection with an interface of a different communication device of the communication system 1800, as well as a radio interface 1824 for setting up and maintaining at least a wireless connection 1826 with the UE 1814 located in a coverage area (not shown in Figure 18) served by the base station 1818. The communication interface 1822 may be configured to facilitate a connection 1828 to the host computer 1802. The connection 1828 may be direct or it may pass through a core network (not shown in Figure 18) of the telecommunication system and/or through one or more intermediate networks outside the telecommunication system. In the embodiment shown, the hardware 1820 of the base station 1818 further includes processing circuitry 1830, which may comprise one or more programmable processors, ASICs, FPGAs, or combinations of these (not shown) adapted to execute instructions. The base station 1818 further has software 1832 stored internally or accessible via an external connection.

The communication system 1800 further includes the UE 1814 already referred to. The UE's 1814 hardware 1834 may include a radio interface 1836 configured to set up and maintain a wireless connection 1826 with a base station serving a coverage area in which the UE 1814 is currently located. The hardware 1834 of the UE 1814 further includes processing circuitry 1838, which may comprise one or more programmable processors, ASICs, FPGAs, or combinations of these (not shown) adapted to execute instructions. The UE 1814 further comprises software 1840, which is stored in or accessible by the UE 1814 and executable by the processing circuitry 1838. The software 1840 includes a client application 1842. The client application 1842 may be operable to provide a service to a human or non-human user via the UE 1814, with the support of the host computer 1802. In the host computer 1802, the executing host application 1812 may communicate with the executing client application 1842 via the OTT connection 1816 terminating at the UE 1814 and the host computer 1802. In providing the service to the user, the client application 1842 may receive request data from the host application 1812 and provide user data in response to the request data. The OTT connection 1816 may transfer both the request data and the user data. The client application 1842 may interact with the user to generate the user data that it provides.

It is noted that the host computer 1802, the base station 1818, and the UE 1814 illustrated in Figure 18 may be similar or identical to the host computer 1716, one of the base stations 1706A, 1706B, 1706C, and one of the UEs 1712, 1714 of Figure 17, respectively. This is to say, the inner workings of these entities may be as shown in Figure 18 and independently, the surrounding network topology may be that of Figure 17.

In Figure 18, the OTT connection 1816 has been drawn abstractly to illustrate the communication between the host computer 1802 and the UE 1814 via the base station 1818 without explicit reference to any intermediary devices and the precise routing of messages via these devices. The network infrastructure may determine the routing, which may be configured to hide from the UE 1814 or from the service provider operating the host computer 1802, or both. While the OTT connection 1816 is active, the network infrastructure may further take decisions by which it dynamically changes the routing (e.g., on the basis of load balancing consideration or reconfiguration of the network).

The wireless connection 1826 between the UE 1814 and the base station 1818 is in accordance with the teachings of the embodiments described throughout this disclosure. One or more of the various embodiments improve the performance of OTT services provided to the UE 1814 using the OTT connection 1816, in which the wireless connection 1826 forms the last segment. More precisely, the teachings of these embodiments may reduce the signaling overhead associated with NF service authorization and thereby provide benefits such as reduced latency and improved throughput within the core network and between core networks, such as in a roaming scenario.

A measurement procedure may be provided for the purpose of monitoring data rate, latency, and other factors on which the one or more embodiments improve. There may further be an optional network functionality for reconfiguring the OTT connection 1816 between the host computer 1802 and the UE 1814, in response to variations in the measurement results. The measurement procedure and/or the network functionality for reconfiguring the OTT connection 1816 may be implemented in the software 1810 and the hardware 1804 of the host computer 1802 or in the software 1840 and the hardware 1834 of the UE 1814, or both. In some embodiments, sensors (not shown) may be deployed in or in association with communication devices through which the OTT connection 1816 passes; the sensors may participate in the measurement procedure by supplying values of the monitored quantities exemplified above, or supplying values of other physical quantities from which the software 1810, 1840 may compute or estimate the monitored quantities. The reconfiguring of the OTT connection 1816 may include message format, retransmission settings, preferred routing, etc.; the reconfiguring need not affect the base station 1818, and it may be unknown or imperceptible to the base station 1818. Such procedures and functionalities may be known and practiced in the art. In certain embodiments, measurements may involve proprietary UE signaling facilitating the host computer's 1802 measurements of throughput, propagation times, latency, and the like. The measurements may be implemented in that the software 1810 and 1840 causes messages to be transmitted, in particular empty or 'dummy' messages, using the OTT connection 1816 while it monitors propagation times, errors, etc.

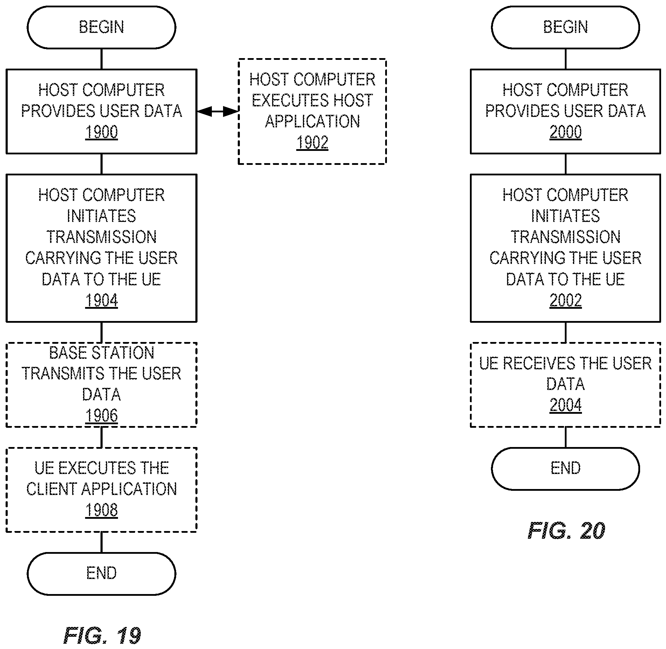

Figure 19 is a flowchart illustrating a method implemented in a communication system, in accordance with some embodiments. The communication system includes a host computer, a base station, and a UE which may be those described with reference to Figures 17 and 18. For simplicity of the present disclosure, only drawing references to Figure 19 will be included in this section. In step 1900, the host computer provides user data. In sub-step 1902 (which may be optional) of step 1900, the host computer provides the user data by executing a host application. In step 1904, the host computer initiates a transmission carrying the user data to the UE. In step 1906 (which may be optional), the base station transmits to the UE the user data which was carried in the transmission that the host computer initiated, in accordance with the teachings of the embodiments described throughout this disclosure. In step 1908 (which may also be optional), the UE executes a client application associated with the host application executed by the host computer.

Figure 20 is a flowchart illustrating a method implemented in a communication system, in accordance with some embodiments. The communication system includes a host computer, a base station, and a UE which may be those described with reference to Figures 17 and 18. For simplicity of the present disclosure, only drawing references to Figure 20 will be included in this section. In step 2000 of the method, the host computer provides user data. In an optional sub-step (not shown) the host computer provides the user data by executing a host application. In step 2002, the host computer initiates a transmission carrying the user data to the UE. The transmission may pass via the base station, in accordance with the teachings of the embodiments described throughout this disclosure. In step 2004 (which may be optional), the UE receives the user data carried in the transmission.

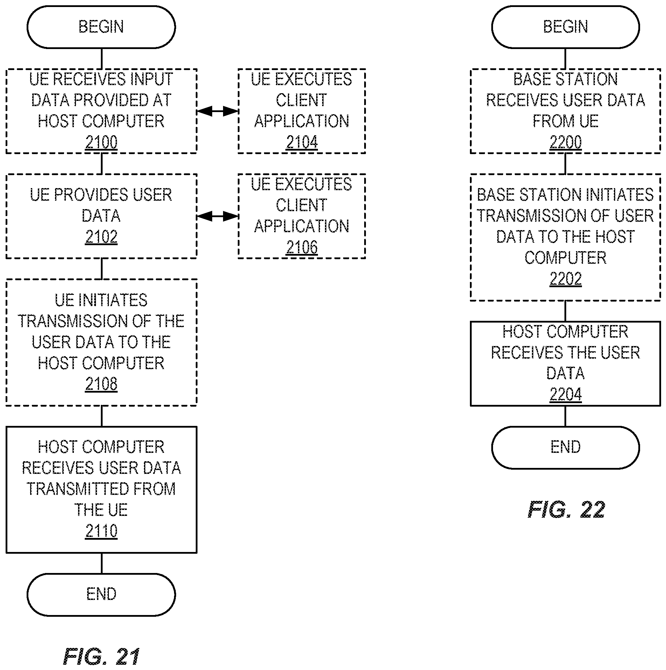

Figure 21 is a flowchart illustrating a method implemented in a communication system, in accordance with some embodiments. The communication system includes a host computer, a base station, and a UE which may be those described with reference to Figures 17 and 18. For simplicity of the present disclosure, only drawing references to Figure 21 will be included in this section. In step 2100 (which may be optional), the UE receives input data provided by the host computer. Additionally or alternatively, in step 2102, the UE provides user data. In sub-step 2104 (which may be optional) of step 2100, the UE provides the user data by executing a client application. In sub-step 2106 (which may be optional) of step 2102, the UE executes a client application which provides the user data in reaction to the received input data provided by the host computer. In providing the user data, the executed client application may further consider user input received from the user. Regardless of the specific manner in which the user data was provided, the UE initiates, in sub-step 2108 (which may be optional), transmission of the user data to the host computer. In step 2110 of the method, the host computer receives the user data transmitted from the UE, in accordance with the teachings of the embodiments described throughout this disclosure.

Figure 22 is a flowchart illustrating a method implemented in a communication system, in accordance with some embodiments. The communication system includes a host computer, a base station, and a UE which may be those described with reference to Figures 17 and 18. For simplicity of the present disclosure, only drawing references to Figure 22 will be included in this section. In step 2200 (which may be optional), in accordance with the teachings of the embodiments described throughout this disclosure, the base station receives user data from the UE. In step 2202 (which may be optional), the base station initiates transmission of the received user data to the host computer. In step 2204 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core (Network) |
| • AF | Application Function |
| • AMF | Access and Mobility Management Function |
| • AN | Access Network |
| • AP | Access Point |
| • ASIC | Application Specific Integrated Circuit |
| • AUSF | Authentication Server Function |
| • CN | Core Network |
| • CPU | Central Processing Unit |
| • DN | Data Network |
| • DSP | Digital Signal Processor |
| • eNB | Enhanced or Evolved Node B |
| • FPGA | Field Programmable Gate Array |
| • gNB | New Radio Base Station |
| • HTTP | Hypertext Transfer Protocol |
| • ID | Identifier, Identity |
| • IETF | Internet Engineering Task Force |
| • IP | Internet Protocol |
| • LTE | Long Term Evolution |
| • MME | Mobility Management Entity |
| • MTC | Machine Type Communication |
| • NB | Node B |
| • NEF | Network Exposure Function |
| • NF | Network Function |
| • NG | Next Generation |
| • NR | New Radio |
| • NRF | Network Repository Function |
| • NSSF | Network Slice Selection Function |
| • OTT | Over-the-Top |
| • PCF | Policy Control Function |
| • PDU | Protocol Data Unit |
| • P-GW | Packet Data Network Gateway |
| • QoS | Quality Of Service |
| • QUIC | Quick UDP Internet Connections |
| • RAM | Random Access Memory |
| • RAN | Radio Access Network |
| • RFC | Request for Comment |
| • ROM | Read Only Memory |
| • RRH | Remote Radio Head |
| • RTT | Round Trip Time |
| • SBA | Service Based Architecture |
| • SBI | Service Based Interface |
| • SCEF | Service Capability Exposure Function |
| • SMF | Session Management Function |
| • TLS | Transport Layer Security |
| • TS | Technical Specification |
| • UDM | Unified Data Management |
| • UDP | User Datagram Protocol |
| • UDR | User Data Repository |
| • UE | User Equipment |
| • UPF | User Plane Function |

Those skilled in the art will recognize improvements and modifications to the embodiments of the present disclosure. All such improvements and modifications are considered within the scope of the concepts disclosed herein.

## Claims

1. A method, implemented in a Network Function, NF, for optimizing NF service authorization, the method comprising:
sending (600, 700, 800), to an authorization server, an authorization request for a procedure that involves a plurality of NF services; and
receiving (602, 702, 802), from the authorization server, an authorization response for the procedure, the authorization response including information authorizing access to the plurality of NF services.

2. The method of claim 1 wherein:
(a) sending the authorization request to the authorization server comprises sending the authorization request to a Network Repository Function, NRF: and/or
(b) receiving (602, 702, 802) the authorization response including the information authorizing access to the plurality of NF services comprises receiving at least one token for authorizing access to the plurality of NF services.

3. The method of claim 2, feature group (b), wherein:
- the received authorization response (602) comprises one token that is used to access at least some of the plurality of NF services; or
- the received authorization response (702) comprises a plurality of tokens, each token for accessing a respective one of the plurality of NF services.

4. A method, implemented in a Network Function, NF, for optimizing NF service authorization, the method comprising:
receiving (604, 704, 804), from an NF service consumer, a service request, the service request comprising information authorizing access to a plurality of NF services; and
sending (610, 710, 812), to the NF service consumer, a service response.

5. The method of claim 4 wherein receiving (604, 704, 804) the service request comprising the information authorizing access to the plurality of NF services comprises receiving at least one token for authorizing access to the plurality of NF services.

6. The method of claim 5 wherein:
- the received service request (604) comprises one token that is used to access at least some of the plurality of NF services; or
- the received service request (704) comprises a plurality of tokens, each token for accessing a respective one of the plurality of NF services; or
- the method further comprises receiving (804), from an authorization server, at least one additional token for authorizing access to one of the plurality of NF services.

7. A method, implemented in an authorization server, for optimizing Network Function, NF, service authorization, the method comprising:
receiving (600, 700, 800), from a requesting entity, an authorization request for a procedure that involves a plurality of NF services;
authorizing the requesting entity, and, upon a determination that the requesting entity is authorized to perform the procedure; and
sending (602, 702, 802), to the requesting entity, an authorization response, the authorization response including information authorizing access to the plurality of NF services.

8. The method of claim 7 wherein:
- the authorization server comprises a Network Repository Function, NRF; and/or
- the requesting entity comprises a NF consumer and/or producer; and/or
- sending (602, 702, 802) the authorization response including the information authorizing access to the plurality of NF services comprises sending at least one token for authorizing access to the plurality of NF services.

9. A method, implemented in a first authorization server, for optimizing Network Function, NF, service authorization, the method comprising:
receiving (1100), from a requesting entity, an authorization request for a procedure that involves a plurality of NF services; and
authorizing (1102) the requesting entity, and, upon a determination that the requesting entity is authorized to perform the procedure:
determining that the requesting entity is a roaming entity, and, upon a determination that the requesting entity is a roaming entity:
forwarding (1104) the authorization request to a second authorization server, the second authorization server being in a home network of the roaming entity;
receiving (1108) a first authorization response from the second authorization server; and
sending (1110), to the requesting entity, a second authorization response, the second authorization response including information authorizing access to the plurality of NF services.

10. The method of claim 9 wherein:
- at least one of the first authorization server and the second authorization server comprises a Network Repository Function, NRF; and/or
- the method further comprises performing an NF service discovery and generating an NF service discovery response, wherein forwarding the authorization request to the second authorization server further comprises forwarding the generated NF service discovery response to the second authorization server; and/or
- sending (1110) the second authorization response comprises sending at least a portion of the first authorization response; and/or
- sending (1110) the second authorization response including the information authorizing access to the plurality of NF services comprises sending at least one token for authorizing access to the plurality of NF services.

11. A method, implemented in a second authorization server, for optimizing Network Function, NF, service authorization, the method comprising:
receiving (1104), from a requesting entity, an authorization request for a procedure that involves a plurality of NF services; and
authorizing (1106) the requesting entity, and, upon a determination that the requesting entity is authorized to perform the procedure:
generating an authorization response (1106), the authorization response including information authorizing access to the plurality of NF services and
determining that the requesting entity is a first authorization server, the second authorization server being in a visited network, and, upon a determination that the requesting entity is a second authorization server in a visited network, sending the authorization response to the second authorization server in the visited network (1108).

12. The method of claim 11 wherein at least one of the first authorization server and the second authorization server comprises a Network Repository Function, NRF.

13. The method of claim 11 or 12 wherein
- the authorization request for the procedure that involves the plurality of NF services further comprises an NF service discovery response for an NF service discovery that was performed by the second authorization server; or
- sending (1108) the authorization response including the information authorizing access to the plurality of NF services comprises sending at least one token for authorizing access to the plurality of NF services.

14. A network node (1200) for performing optimized Network Function, NF, service authorization, the network node comprising:
a network interface (1208);
one or more processors (1204); and
memory (1206) storing instructions executable by the one or more processors, whereby the network node (1200) is operable to perform the method of any of claims 1 to 13.

15. A non-transitory computer readable medium storing software instructions that when executed by one or more processors of a network node (1200) for performing optimized Network Function, NF, service discovery, cause the network node to perform the method of any of claims 1 to 13.

## Patentansprüche

1. Verfahren, das in einer Netzfunktion, NF, implementiert ist, zum Optimieren einer NF-Dienstautorisierung, das Verfahren umfassend:
Senden (600, 700, 800), an einen Autorisierungsserver, einer Autorisierungsanforderung für eine Vorgehensweise, die eine Vielzahl von NF-Diensten beinhaltet; und
Empfangen (602, 702, 802), von dem Autorisierungsserver, einer Autorisierungsantwort für die Vorgehensweise, wobei die Autorisierungsantwort Informationen einschließt, die Zugriff auf die Vielzahl von NF-Diensten autorisieren.

2. Verfahren nach Anspruch 1, wobei:
(a) das Senden der Autorisierungsanforderung an den Autorisierungsserver das Senden der Autorisierungsanforderung an eine Netz-Repository-Funktion, NRF, umfasst: und/oder
(b) das Empfangen (602, 702, 802) der Autorisierungsantwort, die die Informationen einschließt, die den Zugriff auf die Vielzahl von NF-Diensten autorisieren, das Empfangen mindestens eines Tokens zum Autorisieren des Zugriffs auf die Vielzahl von NF-Diensten umfasst.

3. Verfahren nach Anspruch 2, Merkmalsgruppe (b), wobei:
- die empfangene Autorisierungsantwort (602) ein Token umfasst, das verwendet wird, um auf mindestens einige der Vielzahl von NF-Diensten zuzugreifen; oder
- die empfangene Autorisierungsantwort (702) eine Vielzahl von Token umfasst, wobei jedes Token zum Zugreifen auf einen jeweiligen der Vielzahl von NF-Diensten ist.

4. Verfahren, das in einer Netzwerkfunktion, NF, implementiert ist, zum Optimieren der NF-Dienstautorisierung, das Verfahren umfassend:
Empfangen (604, 704, 804), von einem NF-Dienstverbraucher, einer Dienstanforderung, die Dienstanforderung umfassend Informationen, die den Zugriff auf eine Vielzahl von NF-Diensten autorisieren; und
Senden (610, 710, 812), an den NF-Dienstverbraucher, einer Dienstantwort.

5. Verfahren nach Anspruch 4, wobei das Empfangen (604, 704, 804) der Dienstanforderung, umfassend die Informationen, die den Zugriff auf die Vielzahl von NF-Diensten autorisieren, das Empfangen mindestens eines Tokens zum Autorisieren des Zugriffs auf die Vielzahl von NF-Diensten umfasst.

6. Verfahren nach Anspruch 5, wobei:
- die empfangene Dienstanforderung (604) ein Token umfasst, das verwendet wird, um auf mindestens einige der Vielzahl von NF-Diensten zuzugreifen; oder
- die empfangene Dienstanforderung (704) eine Vielzahl von Token umfasst, wobei jedes Token zum Zugreifen auf einen jeweiligen der Vielzahl von NF-Diensten ist; oder
- das Verfahren ferner das Empfangen (804), von einem Autorisierungsserver, mindestens eines zusätzlichen Tokens zum Autorisieren des Zugriffs auf einen der Vielzahl von NF-Diensten umfasst.

7. Verfahren, das in einem Autorisierungsserver implementiert ist, zum Optimieren einer Netzfunktionsdienstautorisierung, NF-Dienstautorisierung, das Verfahren umfassend:
Empfangen (600, 700, 800), von einer anfordernden Entität, einer Autorisierungsanforderung für eine Vorgehensweise, die eine Vielzahl von NF-Diensten beinhaltet;
Autorisieren der anfordernden Entität und, bei einer Bestimmung, dass die anfordernde Entität autorisiert ist, um die Vorgehensweise durchzuführen; und
Senden (602, 702, 802), an die anfordernde Entität, einer Autorisierungsantwort, wobei die Autorisierungsantwort Informationen einschließt, die den Zugriff auf die Vielzahl von NF-Diensten autorisieren.

8. Verfahren nach Anspruch 7, wobei:
- der Autorisierungsserver eine Netz-Repository-Funktion, NRF, umfasst; und/oder
- die anfordernde Entität einen NF-Verbraucher und/oder -Produzenten umfasst; und/oder
- das Senden (602, 702, 802) der Autorisierungsantwort, die die Informationen einschließt, die den Zugriff auf die Vielzahl von NF-Diensten autorisieren, das Senden mindestens eines Tokens zum Autorisieren des Zugriffs auf die Vielzahl von NF-Diensten umfasst.

9. Verfahren, das in einem ersten Autorisierungsserver implementiert ist, zum Optimieren der Netzfunktionsdienstautorisierung, NF-Dienstautorisierung, das Verfahren umfassend:
Empfangen (1100), von einer anfordernden Entität, einer Autorisierungsanforderung für eine Vorgehensweise, die eine Vielzahl von NF-Diensten beinhaltet; und
Autorisieren (1102) der anfordernden Entität und, bei einer Bestimmung, dass die anfordernde Entität autorisiert ist, um die Vorgehensweise durchzuführen:
Bestimmen, dass die anfordernde Entität eine Roaming-Entität ist, und bei einer Bestimmung, dass die anfordernde Entität eine Roaming-Entität ist:
Weiterleiten (1104) der Autorisierungsanforderung an einen zweiten Autorisierungsserver, wobei sich der zweite Autorisierungsserver in einem Heimnetz der Roaming-Entität befindet;
Empfangen (1108) einer ersten Autorisierungsantwort von dem zweiten Autorisierungsserver; und
Senden (1110), an die anfordernde Entität, einer zweiten Autorisierungsantwort, wobei die zweite Autorisierungsantwort Informationen einschließt, die den Zugriff auf die Vielzahl von NF-Diensten autorisieren.

10. Verfahren nach Anspruch 9, wobei:
- mindestens einer des ersten Autorisierungsservers und des zweiten Autorisierungsservers eine Netz-Repository-Funktion, NRF, umfasst; und/oder
- das Verfahren ferner das Durchführen einer NF-Diensterkennung und ein Erzeugen einer NF-Diensterkennungsantwort umfasst, wobei das Weiterleiten der Autorisierungsanforderung an den zweiten Autorisierungsserver ferner das Weiterleiten der erzeugten NF-Diensterkennungsantwort an den zweiten Autorisierungsserver umfasst; und/oder
- das Senden (1110) der zweiten Autorisierungsantwort das Senden mindestens eines Anteils der ersten Autorisierungsantwort umfasst; und/oder
- das Senden (1110) der zweiten Autorisierungsantwort, die Informationen einschließt, die den Zugriff auf die Vielzahl von NF-Diensten autorisieren, das Senden mindestens eines Tokens zum Autorisieren des Zugriffs auf die Vielzahl von NF-Diensten umfasst.

11. Verfahren, das in einem zweiten Autorisierungsserver implementiert ist, zum Optimieren der Netzfunktionsdienstautorisierung, NF-Dienstanforderung, das Verfahren umfassend:
Empfangen (1104), von einer anfordernden Entität, einer Autorisierungsanforderung für eine Vorgehensweise, die eine Vielzahl von NF-Diensten beinhaltet; und
Autorisieren (1106) der anfordernden Entität und, bei einer Bestimmung, dass die anfordernde Entität autorisiert ist, um die Vorgehensweise durchzuführen:
Erzeugen einer Autorisierungsantwort (1106), wobei die Autorisierungsantwort Informationen einschließt, die den Zugriff auf die Vielzahl von NF-Diensten autorisieren
und
Bestimmen, dass die anfordernde Entität ein erster Autorisierungsserver ist, wobei sich der zweite Autorisierungsserver in einem besuchten Netz befindet, und bei einer Bestimmung, dass die anfordernde Entität ein zweiter Autorisierungsserver in einem besuchten Netz ist, Senden der Autorisierungsantwort an den zweiten Autorisierungsserver in dem besuchten Netz (1108).

12. Verfahren nach Anspruch 11, wobei mindestens einer des ersten Autorisierungsservers und des zweiten Autorisierungsservers eine Netz-Repository-Funktion, NRF, umfasst.

13. Verfahren nach Anspruch 11 oder 12, wobei
- die Autorisierungsanforderung für die Vorgehensweise, die die Vielzahl von NF-Diensten beinhaltet, ferner eine NF-Diensterkennungsantwort für eine NF-Diensterkennung umfasst, die durch den zweiten Autorisierungsserver durchgeführt wurde; oder
- das Senden (1108) der Autorisierungsantwort, die die Informationen einschließt, die den Zugriff auf die Vielzahl von NF-Diensten autorisieren, das Senden mindestens eines Tokens zum Autorisieren des Zugriffs auf die Vielzahl von NF-Diensten umfasst.

14. Netzknoten (1200) zum Durchführen einer optimierten Netzfunktionsdienstautorisierung, NF-Dienstautorisierung, der Netzknoten umfassend:
eine Netzschnittstelle (1208);
einen oder mehrere Prozessoren (1204); und
einen Speicher (1206), der Anweisungen speichert, die durch den einen oder die mehreren Prozessoren ausführbar sind, wobei der Netzknoten (1200) betriebsfähig ist, um das Verfahren nach einem der Ansprüche 1 bis 13 durchzuführen.

15. Nichtflüchtiges computerlesbares Medium, das Softwareanweisungen speichert, die, wenn sie durch einen oder mehrere Prozessoren eines Netzknotens (1200) zum Durchführen einer optimierten Netzfunktionsdiensterkennung, NF-Diensterkennung, ausgeführt werden, den Netzknoten veranlassen, das Verfahren nach einem der Ansprüche 1 bis 13 durchzuführen.

## Revendications

1. Procédé, implémenté dans une fonction réseau, NF, destiné à optimiser une autorisation de service NF, le procédé comprenant :
l'envoi (600, 700, 800), à un serveur d'autorisation, d'une demande d'autorisation pour une procédure qui implique une pluralité de services NF ; et
la réception (602, 702, 802), depuis le serveur d'autorisation, d'une réponse d'autorisation pour la procédure, la réponse d'autorisation comportant des informations autorisant un accès à la pluralité de services NF.

2. Procédé selon la revendication 1, dans lequel :
(a) l'envoi de la demande d'autorisation au serveur d'autorisation comprend l'envoi de la demande d'autorisation à une fonction de référentiel réseau, NRF : et/ou
(b) la réception (602, 702, 802) de la réponse d'autorisation comportant les informations autorisant un accès à la pluralité de services NF comprend la réception d'au moins un jeton pour autoriser un accès à la pluralité de services NF.

3. Procédé selon la revendication 2, groupe de caractéristiques (b), dans lequel :
- la réponse d'autorisation reçue (602) comprend un jeton qui est utilisé pour accéder à au moins certains parmi la pluralité de services NF ; ou
- la réponse d'autorisation reçue (702) comprend une pluralité de jetons, chaque jeton permettant d'accéder à l'un respectif parmi la pluralité de services NF.

4. Procédé, implémenté dans une fonction réseau, NF, destiné à optimiser une autorisation de service NF, le procédé comprenant :
la réception (604, 704, 804), depuis un consommateur de service NF, d'une demande de service, la demande de service comprenant des informations autorisant un accès à une pluralité de services NF ; et
l'envoi (610, 710, 812), au consommateur de service NF, d'une réponse de service.

5. Procédé selon la revendication 4 dans lequel la réception (604, 704, 804) de la demande de service comprenant les informations autorisant un accès à la pluralité de services NF comprend la réception d'au moins un jeton pour autoriser un accès à la pluralité de services NF.

6. Procédé selon la revendication 5, dans lequel :
- la demande de service reçue (604) comprend un jeton qui est utilisé pour accéder à au moins certains parmi la pluralité de services NF ; ou
- la demande de service reçue (704) comprend une pluralité de jetons, chaque jeton permettant d'accéder à l'un respectif parmi la pluralité de services NF ; ou
- le procédé comprend en outre la réception (804), depuis un serveur d'autorisation, d'au moins un jeton supplémentaire pour autoriser un accès à l'un parmi la pluralité de services NF.

7. Procédé, implémenté dans un serveur d'autorisation, destiné à optimiser une autorisation de service de fonction réseau, NF, le procédé comprenant :
la réception (600, 700, 800), depuis une entité demandeuse, d'une demande d'autorisation pour une procédure qui implique une pluralité de services NF ;
l'autorisation de l'entité demandeuse, et, lors d'une détermination que l'entité demandeuse est autorisée à mettre en oeuvre la procédure ; et
l'envoi (602, 702, 802), à l'entité demandeuse, d'une réponse d'autorisation, la réponse d'autorisation comportant des informations autorisant un accès à la pluralité de services NF.

8. Procédé selon la revendication 7, dans lequel :
- le serveur d'autorisation comprend une fonction de référentiel réseau, NRF ; et/ou
- l'entité demandeuse comprend un consommateur et/ou producteur de NF ; et/ou
- l'envoi (602, 702, 802) de la réponse d'autorisation comportant les informations autorisant un accès à la pluralité de services NF comprend l'envoi d'au moins un jeton pour autoriser un accès à la pluralité de services NF.

9. Procédé, implémenté dans un premier serveur d'autorisation, destiné à optimiser une autorisation de service de fonction réseau, NF, le procédé comprenant :
la réception (1100), depuis une entité demandeuse, d'une demande d'autorisation pour une procédure qui implique une pluralité de services NF ; et
l'autorisation (1102) de l'entité demandeuse, et, lors d'une détermination que l'entité demandeuse est autorisée à mettre en oeuvre la procédure :
la détermination que l'entité demandeuse est une entité d'itinérance, et, lors d'une détermination que l'entité demandeuse est une entité d'itinérance :
l'acheminement (1104) de la demande d'autorisation à un second serveur d'autorisation, le second serveur d'autorisation étant dans un réseau domestique de l'entité d'itinérance ;
la réception (1108) d'une première réponse d'autorisation provenant du second serveur d'autorisation ; et
l'envoi (1110), à l'entité demandeuse, d'une seconde réponse d'autorisation, la seconde réponse d'autorisation comportant des informations autorisant un accès à la pluralité de services NF.

10. Procédé selon la revendication 9, dans lequel :
- au moins l'un parmi le premier serveur d'autorisation et le second serveur d'autorisation comprend une fonction de référentiel réseau, NRF ; et/ou
- le procédé comprend en outre la mise en oeuvre d'une découverte de service NF et la génération d'une réponse de découverte de service NF, dans lequel l'acheminement de la demande d'autorisation au second serveur d'autorisation comprend en outre l'acheminement de la réponse de découverte de service NF générée au second serveur d'autorisation ; et/ou
- l'envoi (1110) de la seconde réponse d'autorisation comprend l'envoi d'au moins une partie de la première réponse d'autorisation ; et/ou
- l'envoi (1110) de la seconde réponse d'autorisation comportant les informations autorisant un accès à la pluralité de services NF comprend l'envoi d'au moins un jeton pour autoriser un accès à la pluralité de services NF.

11. Procédé, implémenté dans un second serveur d'autorisation, destiné à optimiser une autorisation de service de fonction réseau, NF, le procédé comprenant :
la réception (1104), depuis une entité demandeuse, d'une demande d'autorisation pour une procédure qui implique une pluralité de services NF ; et
l'autorisation (1106) de l'entité demandeuse, et, lors d'une détermination que l'entité demandeuse est autorisée à mettre en oeuvre la procédure :
la génération d'une réponse d'autorisation (1106), la réponse d'autorisation comportant des informations autorisant un accès à la pluralité de services NF
et
la détermination que l'entité demandeuse est un premier serveur d'autorisation, le second serveur d'autorisation étant dans un réseau visité, et, lors d'une détermination que l'entité demandeuse est un second serveur d'autorisation dans un réseau visité, l'envoi de la réponse d'autorisation au second serveur d'autorisation dans le réseau visité (1108).

12. Procédé selon la revendication 11 dans lequel au moins l'un parmi le premier serveur d'autorisation et le second serveur d'autorisation comprend une fonction de référentiel réseau, NRF.

13. Procédé selon la revendication 11 ou 12 dans lequel
- la demande d'autorisation pour la procédure qui implique la pluralité de services NF comprend en outre une réponse de découverte de service NF pour une découverte de service NF qui a été mise en oeuvre par le second serveur d'autorisation ; ou
- l'envoi (1108) de la réponse d'autorisation comportant les informations autorisant un accès à la pluralité de services NF comprend l'envoi d'au moins un jeton pour autoriser un accès à la pluralité de services NF.

14. Noeud de réseau (1200) destiné à mettre en oeuvre une autorisation de service de fonction réseau, NF, optimisée, le noeud de réseau comprenant :
une interface réseau (1208) ;
un ou plusieurs processeurs (1204) ; et
de la mémoire (1206) stockant des instructions exécutables par le ou les processeurs, moyennant quoi le noeud de réseau (1200) est fonctionnel pour mettre en oeuvre le procédé selon l'une quelconque des revendications 1 à 13.

15. Support non transitoire lisible par ordinateur stockant des instructions logicielles qui lorsqu'elles sont exécutées par un ou plusieurs processeurs d'un noeud de réseau (1200) pour mettre en oeuvre une découverte de service de fonction réseau, NF, optimisée, amènent le noeud de réseau à mettre en oeuvre le procédé selon l'une quelconque des revendications 1 à 13.
